# EUROPEAN PATENT APPLICATION

(11) **EP 4 349 797 A1**
(43) Date of publication of application: **10.04.2024**
(21) Application number: 22806739.3
(22) Date of filing: 10.05.2022
(51) Int. Cl.: C04B 35/10, C04B 35/66, C04B 35/645

(54) **CA6-BASED REFRACTORY MATERIAL WITH MEDIUM VOLUME DENSITY, PREPARATION METHOD THEREFOR, AND USE THEREOF**

(30) Priority: 10.05.2021 CN 202110506467
(71) Applicant: Zibo Langfeng High Temperature Materials Co., Ltd., Zibo, Shandong 255138 (CN); The University of Science and Technology Beijing, Beijing 100083 (CN); Zibo City Luzhong Refractories Co., Ltd., Zibo, Shandong 255138 (CN)
(72) Inventor: CHEN, Junhong, Beijing 100083 (CN); FENG, Jisheng, Zibo, Shandong 255138 (CN); JIA, Yuanping, Zibo, Shandong 255138 (CN); LI, Bin, Beijing 100083 (CN); ZHU, Bo, Zibo, Shandong 255138 (CN); LI, Guangqi, Beijing 100083 (CN); GUO, Yutao, Zibo, Shandong 255138 (CN)
(74) Representative: Lavoix
(86) International application number: PCT/CN2022/091972
(87) International publication number: WO 2022/237776

(57) **Abstract**

Disclosed are a CA6-based thermally insulating refractory material with a medium volume density, a preparation method therefor, and the use thereof. The CA6-based thermally insulating refractory material with a medium volume density in the present invention has phases comprising CA6 and one or more selected from C2M2A14, C2M2A8, magnesium aluminate spinel, and corundum, and the refractory material has a high purity, good high temperature stability, a uniform structure, stable performance, a relatively low thermal conductivity, and good corrosion resistance to a metal, slag, etc..

## Description

### Technical field

This application relates to the technical field of refractory materials, in particular to a CA6-based refractory material with medium bulk density, a preparation method therefor, and use thereof.

### Background art

The integrity, safety, no steel leakage and certain heat preservation performance of ladle lining refractory material are very critical for the molten steel refining ladle, and the permanent lining refractory material plays a very important role in it.

Currently, ladle liners are typically designed with three layers of structure: a working lining, a permanent lining and a thermal-insulating lining. The working lining is in contact with high temperature melt, which requires good high temperature performance and good resistance to the corrosion of molten steel slag. The permanent lining has the effect of both safety and heat preservation and thermal insulation, which can not only resist the high temperature and erosion of slag and molten steel in the case of losing the working lining, and meet the primary condition of safety, but also prevent or weaken the outward transmission of heat, reduce the temperature borne on heat preservation and thermal insulation lining, and achieve the function of heat preservation and thermal insulation.

At present, the existing permanent lining of ladle is generally prepared by medium-heavy high-aluminum castable, or aluminum-magnesium system castable, or ordinary low-cement high-aluminum castable, or high-aluminum castable with the addition of part of mullite light aggregate, *etc..* The slag erosion resistance of light aggregate is poor, therefore from the safety point of view, the application of light mullite as permanent lining aggregates for steel ladle is relatively less.

The construction of a permanent lining is mostly carried out on site. After building the thermal-insulating lining in the ladle, the core mold is fixed in the inner part of ladle. And then, the casting material is poured and vibrated after being stirred with water on site. The castable is filled between the core mold and the thermal-insulating lining by fluidity, then forms the whole with the help of the hydration of cement and other hydration components, and produces strength.

Castable is an aggregation of aggregate and fine powder. The aggregate is a granular material with particle size greater than 0.088 mm, and the fine powder is a powder with particle size less than 0.088 mm. The sintering activity of the granular material is very poor, and basically will not be sintered, while the sintering activity of the fine powder is relatively high, and the integrity of castable mainly comes from the sintering action of fine powder. In addition to the main raw material powder, the fine powder also comprises components with hydration binding effect such as aluminate cement or MgO and other, components for enhancing fluidity such as silicon micorpowder and active alumina micorpowder, additives for promoting sintering effect and dispersants for dispersing *etc.* Therefore, compared with the aggregate, the matrix part is the weakest part of high-temperature performance of castable. Owing to the preparation concept and performance of castable, it is different to change the high-temperature performance of the matrix part.

At present, the low-cement high aluminum castable used for permanent lining is generally prepared from bauxite, pure aluminate cement and silicon micropowder, and its bulk density is generally 2.95-3.15 g/cm³. Bauxite is generally secondary or tertiary bauxite with high impurity composition content, the liquid phase content formed at high temperature is high, and a high temperature deformation of the material is large. Hence, there is a process of organizational structure densification in the use of the material, which leads to a higher thermal conductivity and greater heat dissipation. At the same time,, owning to the larger content of liquid phase of the material at high temperature, the corrosion resistance to molten steel and slag is weak. After the lining is eroded, it is difficult to resist the erosion of molten steel only by relying on the material, and it is easy to leak steel. In addition, the structure of the material will be loose and the strength will decrease after repeated use.

The aluminum-magnesium castable is generally prepared from bauxite, magnesia powder and silica micropowder, and its bulk density is generally 3.0-3.15 g/cm³. The raw materials used in the material are all natural materials with high impurity composition content, the liquid phase content formed at high temperature is high, and the high temperature deformation of this material is large. Hence, there is a process of organizational structure densification in the use of this material, which lead to a higher thermal conductivity and greater heat dissipation. At the same time, due to the large content of liquid phase of the material at high temperature, the corrosion resistance to molten steel and slag is weak. After the work lining is eroded, it is difficult to resist the corrosion of molten steel only by relying on the material, and it is easy to leak steel.

The existing application materials and technologies such as these have been used for decades, but they have not been able to meet the requirements of safety, energy saving and heat preservation, and have not been greatly improved, mainly because the raw materials have not changed, which is caused by the characteristics of raw materials. The microstructure of the bauxite is mainly composed of corundum in the shape of rod or column and mullite, and the liquid phase is filled in the gap of corundum and mullite. This structure not only leads to deformation and densification of the organizational structure, but also leads to a high thermal conductivity due to the interlocking columnar crystals, which is the main drawback of current applied materials.

### Summary of the invention

Compared with the microstructure of bauxite, the structure of calcium hexaluminate is a more suitable raw material for permanent lining. Therefore, in addition to the existing application technology materials, there are also some published patents, such as materials containing CA6, etc..

The chemical composition of calcium hexaluminate (CaO · 6Al₂O₃, abbreviated as CA6) is CaO and Al₂O₃, the melting point is 1875 °C, the theoretical density is 3.79 g/cm³, and the fire resistance is good. The crystal structure of CA6 is a magnetoplumbite structure, which is formed by stacking lamellar structure in the C axis. The thermal conductivity in the C axis is low, and the gap between lamellar structures also leads to the low thermal conductivity. Therefore, the thermal conductivity of calcium hexaluminate raw material is very small. CMA (unified abbreviation for CaO · 2MgO · 8Al₂O₃ and 2CaO · 2MgO - 14Al₂O₃) is based on stacking CA6 and MgO · Al₂O₃ structure in the C axis, its structure is similar with that of CA6 and also tends to form a layered structure with a low thermal conductivity. Giving the structure and performance of CMA are similar to these of CA6, CA6 is used as a substitute in the following description.

This lamellar structure not only leads to poor heat transfer performance, but also makes it difficult to sinter calcium hexaaluminate material. At present, the bulk density of calcium hexaaluminate prepared in the laboratory is generally 2.20-2.70 g/cm³, which is difficult to be applied in the field of high temperatures. Because of this lamellar structure, the sinterability is very poor, which is the main reason why it is difficult to prepare CA6 system materials with the bulk density of above 3.0 g/cm³. In addition, in the process of preparing calcium hexaaluminate refractory material, the volume expansion effect accompanied by the reaction among each component also affects the sintering and densification process of calcium hexaaluminate material.

At present, in order to achieve densification of calcium hexaaluminate, additives such as SiO₂ and TiO₂ are mostly used, and then the liquid phase appears at high temperature to promote its densification and sintering. For example, Chen Zhaoyou and Chai Junlan discuss the physical and chemical properties of Bonaite (trade name of calcium hexaaluminate) in "calcium hexaaluminate material and its application in aluminum industrial furnaces (Chen Zhaoyou et al., calcium hexaaluminate material and its application in aluminum industrial furnaces [J]. Refractory materials, 2011,45 (2): 122 ~ 125.)", in which the chemical composition of SiO₂ is 0.9%. Another examples are "A preparation method of dense calcium hexaaluminate refractory clinker" (CN110171980A) and "A dense calcium hexaluminate refractory clinker and preparation method thereof'(CN105585314A), wherein TiO₂ and MnO are used as sintering agents. However, this method cannot achieve densification by controlling the stacking of atoms in the mirror layer and only relies on the liquid phase to narrow the distance between the grains, and the liquid phase is filled in the space between the crystal grains of calcium hexaaluminate to transfer the heat. Therefore, although this method can improve the density of calcium hexaaluminate, the structure of calcium hexaaluminate is not controllable, and the thermal conductivity is high.

CA6 materials disclosed in the current patent application can be roughly classified into five categories: (1) CA6 materials with volume density less than 2.0 g/cm³; although the material has low thermal conductivity and good heat preservation performance, it is not suitable for ladle permanent lining to resist the erosion of slag and molten steel; (2) based on CA6 and other components, the strength of the material is increased by forming a second phase, but the overall density of the material is low, making it difficult to use for permanent lining and other aspects; (3) the bulk density of high-purity CA6 materials (the total content of Al₂O₃+CaO is ≥ 97.0%) prepared without introducing sinter promoting additives is mostly less than 2.5 g/cm³ and the strength is very low, which is unable to meet the use requirements; (4) based on CA6, sintering densification is achieved by adding sintering additives; because of the lamellar structure of CA6 itself, CA6 material is difficult to sintering, and basically SiO₂, TiO₂, etc., are added to promote sintering densification; (5) with more (≥20%) corundum or activated alumina powder. The strength of CA6 composite materials is achieved by adding more corundum or active alumina micropowder (≥20%) and sintering corundum or active alumina micropowder.

For ladle permanent lining material, the existing problems and defects of existing industrial technologies or existing patented technologies are as follows:
(1) Poor corrosion resistance to steel slag
   The castable based on natural bauxite has high impurity content and large amount of liquid phase at high temperature, which is difficult to resist the erosion of molten steel and slag. Therefore, under the condition that the working lining disappears, the current permanent lining materials and technologies are difficult to ensure the safety. Although the permanent lining is given the concept of security lining, it is difficult to meet the requirements.
(2) Shrinkage and densification at high temperature, resulting in the changes of the organizational structure of the material and further increasing in the thermal conductivity of the material.
   The bauxite material of the permanent lining castable based on bauxite are all natural raw materials, which contains more impurities and has large content of liquid phase at high temperature. Meanwhile, this kind of castable is based on a system of improving the fluidity silicon micropowder, the addition of silica micro-powder is large, and the liquid phase content at high temperature will increase exponentially. Therefore, the castable will occur a certain degree of shrinkage and densification when used at high temperature and the material is further densified with the application, and the thermal conductivity will be further increased.
(3) High thermal conductivity of the material
   At present, the aggregate and fine powder of the medium-heavy high-aluminum castable, whether ordinary high-aluminum castable, aluminum-magnesium castable, or low-cement high-aluminum castable, are basically sintered bauxite. Although the medium-heavy mullite castable uses light mullite raw material as part of the aggregate, the fine powder is still sintered bauxite. Bauxite has a high density and high thermal conductivity, and the bulk density of these materials is more than 2.6 g/cm³, even as high as 3.15 g/cm³. The density of these medium-heavy materials is very high, and the thermal conductivity cannot be significantly reduced
(4) Material shrinkage leading to external expansion of working lining refractory materials, weakening extrusion force between bricks, decreasing integrity, and easy to lead to steel leakage.
   The castable based on bauxite, a natural raw material, has a high impurity content and large content of liquid phase at high temperature, it will appear sintering shrinkage after a long time of use, leading to the supporting force weakened outside the working lining, the outward expansion of the working lining, and cracks or broken bricks in the working lining, which is easy to appear steel leakage accident.
(5) CA6 system materials sintered by relying on additives, with large content of liquid phase, low high temperature performance and high thermal conductivity.
   Due to the unique lamellar structure of CA6, it is difficult to sintering. Therefore, most of the existing CA6 refractory materials used as permanent lining of ladle rely on additives to generate liquid phase and promote sintering. Although this method can promote the sintering of CA6, more content of liquid phase leads to the decline of its high temperature performance, and the liquid phase is filled between the grains, which acts as a bridge of heat transfer, resulting in a substantial increase in thermal conductivity.
(6) Introducing more corundum to make up for the difficult of sintering of CA6 material, resulting in greatly increased thermal conductivity.
   In order to improve the sintering and erosion resistance of CA6 materials, more active alumina micropowder and corundum powder are usually added in existing published patents. Although this can improve the sintering property and integrity, the thermal conductivity will also be increased exponentially and the heat preservation performance will be decreased.
(7) The bulk density and strength of high purity CA6 material are relatively low, so it is difficult to act as a permanent lining material.
   Due to the difficult sintering of CA6 material, the post-sintering density of high-purity CA6 products is generally between 2.0-2.5 g/cm³, and the organizational structure is uneven and the strength is very low, which is not feasible for the permanent lining material of ladle under greater pressure.
(8) The material shrinks greatly at high temperature and there are often mesh cracks and large cracks, which seriously affect the safety of ladle smelting.
   As the liquid phase of the material at high temperature increases, the organizational structure creep becomes larger, the material shrinks and the volume becomes smaller, leading to mesh cracks and large cracks often appearing in the permanent lining material. This kind of crack is very dangerous and is of a great concern to steel mills. When the working lining is eroded or the liquid steel penetrates between the working linings, it is easy to leak out through the cracks of the permanent lining, leading to serious steel leakage accidents.

Therefore, at present, both the existing materials used in the current steel mill and the published patent technologies cannot really achieve safety and heat preservation. There are many high temperature liquid phases, which is deformed and densified under the action of the liquid phase, resulting in continuous increase in thermal conductivity in the process of use; at the same time there are many liquid phases, the erosion resistance to molten steel and slag is poor, and it is difficult to resist the erosion of slag and play a role in protection and safety in the case of losing the working lining material; or it is in high purity, not dense in sintering and uneven in structure, which makes it difficult to resist the expansion pressure of the working lining of ladle, thereby leading to the compression of the permanent lining material, the overall outward expansion of the working lining material, and decrease of the integrity which leads to accidents such as steel leakage.

The difficulty of solving the above problems and defects is as follows:
(1) The preparation method of castable determines its weakness, which is difficult to change.
   In particular, as an amorphous refractory castable, it is directly applied without sintering. The strength of normal temperature and low temperature originates from the hydration and bonding of cement. When the crystalline water and binding water disappear at 800-900 °C, it mainly relies on the close packing of the material itself and the added silicon micropowder to maintain the strength. When the temperature rises again, it depends on the added silicon micropowder and other low melting point phases to maintain the strength.
   At the same time, refractory material is an aggregation of aggregate and fine powder. Because the surface of aggregate particles involved in a large sintering and reaction bluntness, it is difficult to sintering, so the strength of refractory materials mainly comes from the sintering of matrix fine powder. Therefore, on the one hand, the matrix fine powder of refractory materials requires small fineness and large specific surface area. Meanwhile, some foreign components that need to promote sintering are mostly added to the matrix fine powder, which also leads to the non-uniformity of the composition distribution of refractory materials. The high temperature performance of matrix fine powder is worse than that of aggregate, and the high temperature performance is further weakened after adding sintering additives. For some application areas, sintering additives are necessary, especially for castables such as ladle permanent lining, which are directly applied without high temperature sintering and can only be sintered by the high temperature in the use process. In this way, there must be more sintering additives, which is determined by the development concept of refractory materials, and it is difficult to improve. However, the raw materials with high purity are the main materials and the prepared material is difficult to sinter and cannot form a unified whole.
   In addition, in order to ensure fluidity and construction performance, water-reducing agent, micropowder and other additives should be added in the castables. Moreover, the raw materials are basically natural raw materials, therefore, it is difficult to change the weakness of permanent lining materials such as aluminum magnesium castable and high aluminum castable.
(2) At present, there are many high temperature liquid phases in the permanent lining castable, and the organizational structure is further densified in use.
   The natural raw material has high impurity content and more liquid phase at high temperature. The refractory material based on the natural raw material has large deformation, unstable organizational structure, densification and increasing thermal conductivity phenomenon under high temperature service; this is something that refractory materials based on natural raw materials cannot change.
(3) The content of high temperature liquid phase is large, and erosion resistance and resistance to molten steel and slag are low.
   Different from fired refractory materials, castable must rely on matrix fine powder to meet the constructability, to achieve sintering and form strength. Therefore, the additives that promote sintering, the water reducing agent and the surfactant that enhance the fluidity, the hydration raw materials that form strength at normal temperature and the medium temperature and so on are added to the fine powder of the matrix, which causes the composition of the castable matrix to be very complex. In addition, the high temperature performance of castable must be greatly reduced, which cannot be changed.
(4) CA6 castable based on high purity raw material in the existing patent also has the same problems such as aluminum-magnesium castable and high-aluminum castable.
   Compared with the castable of bauxite system, although the performance of CA6 is much better than that of bauxite, its high temperature performance is still poor based on the following points: ① CA6 castable also needs to form its own strength at medium and high temperature to meet its integrity as a permanent lining, and also need to be sintered at medium and low temperature, which requires the introduction of components that can be sintered into liquid phase at low temperature; ② CA6 castable also needs to add micro powder, water reducing agent and micro powder etc. to promote liquidity; ③ Promoting sintering at low temperature and forming a large amount of liquid phase at high temperature lead to a series of problems such as the decline of slag erosion resistance at high temperature, the densification of organizational structure, and the increase of thermal conductivity.
(5) For CA6 castable in existing patent applications, in order to avoid deterioration of organizational structure and excessive high temperature liquid phase, only alumina and corundum, etc. can be added, resulting in an increase thermal conductivity.

The preparation method and characteristics of castable determine that the matrix is a weak point, which will cause the decline of the performance of the whole castable. Therefore, in order to alleviate the shortage of CA6 castables, it is only possible to introduce a large amount of active alumina micropowder and corundum powder to intensify the high temperature performance of the matrix and strengthen the stability of its organizational structure. However, this also brings about a series of problems such as the increase of thermal conductivity.

For castables, good fluidity, suitable hardening, easy sintering, less high temperature liquid phase, high erosion resistance, and no degradation of performance, etc. need to be implemented on the matrix, which has been difficult to reconcile the contradiction and is also difficult to solve.

The significance of solving the above problems and defects is as follows: it can realize the pure purification of permanent lining materials, enhance the resistance of permanent lining materials to slag and molten steel, ensure the safety of smelting ladle and prevent the occurrence of major accidents such as steel leakage; it can enhance the structural stability and high temperature integrity of the material, give the permanent lining material a low and stable thermal conductivity, prevent the heat from being transferred to the outside, reduce the heating temperature of molten steel, reduce the tapping temperature and carbon-oxygen equilibrium of the converter, reduce the consumption of refractory materials and reduce the amount of alloy, which results in a significant economic and social economic benefits.

In order to solve the above problems, the application provides a CA6-based thermal-insulating refractory material with medium bulk density, a preparation method and use thereof.

In this application, the CA6-based refractory with medium bulk density is prepared by hot-pressed sintering with fine powder or a mixture of granular materials and fine powders. The obtained refractory material has high purity, good high temperature stability, uniform organizational structure and stable performance.

The specific technical scheme of This invention is as follows:
1. A CA6-based thermal-insulating refractory material with medium bulk density, the phase of the thermal-insulating refractory material comprises CA6 and one or two or more selected from C2M2A14, CM2A8, magnesium aluminate spinel and corundum.
2. The thermal-insulating refractory material according to item 1, wherein based on the mass percentage in the thermal-insulating refractory material, the total content of CA6, C2M2A14, CM2A8, magnesium aluminate spinel and corundum is ≥90%, preferably 94.8-100%.
3. The thermal-insulating refractory material according to item 1 or 2, wherein based on the mass percentage of the phase of the thermal-insulating refractory material, the phase content of CA6 is 26.7-100%, preferably 29.0-100%, more preferably 31.5-100%, still more preferably 31.5-99.5%, further preferably 38.7-99.5%;
   the phase content of C2M2A14 is 0-72%, preferably 0-60%;
   the phase content of CM2A8 is 0-72%, preferably 0-60%, further preferably 0-59.5%;
   the phase content of magnesium aluminate spinel is 0-10%, 0-8.0%, 0-4.60%, 0-4.0%, preferably 0; and
   the phase content of corundum is 0-30%, preferably 0-18%, more preferably 0-16.5%, further preferably 0-15%, most preferably 0-12%.
4. The thermal-insulating refractory material according to any one of items 1-3, wherein the chemical composition of the thermal-insulating refractory material comprises Al₂O₃, CaO and MgO, based on the mass percentage in the thermal-insulating refractory material, the Al₂O₃ is 86.65-94.10%, preferably 87.60-94.10%, 86.65-92.80%, more preferably 88.07-94.10%, 87.50-92.60%;
   the CaO is 5.80-8.40%, preferably 6.10-8.40%, 6.89-8.40%; and
   the MgO is 0-6.05%, preferably 0-5.53%, 0-5.43%, 0-5.04%.
5. The thermal-insulating refractory material according to any one of items 1-4, wherein the bulk density of the thermal-insulating refractory material is 2.40-2.90 g/cm³, preferably 2.40-2.82 g/cm³.
6. The thermal-insulating refractory material according to any one of items 1-5, wherein the phase of the matrix part of the thermal-insulating refractory material comprises CA6 and one or two or more selected from corundum, magnesium aluminate spinel, C2M2A14 and CM2A8.
7. The thermal-insulating refractory material according to item 6, wherein based on the mass percentage of the phase of the matrix part in the thermal-insulating refractory material, the phase content of CA6 is 67.4-100%, preferably 72.5-100%, 78.2-100%, 78.8-100%;
   the phase content of corundum is 0-30%, preferably 0-20%, 0-25%;
   the phase content of magnesium aluminate spinel is 0-10%, 0-8.0%, 0-6.7%, 0-5.22%, preferably 0;
   the phase content of C2M2A14 is 0-30%, preferably 0-25%, 0-20%, 0-18.8%; and
   the phase content of CM2A8 is 0-30%, preferably 0-25%, 0-20%, 0-18.8%.
8. The thermal-insulating refractory material according to item 6 or 7, wherein the chemical composition of the matrix part of the thermal-insulating refractory material comprises Al₂O₃, CaO and MgO, based on the mass percentage of the matrix part in the thermal-insulating refractory material, the Al₂O₃ is 89.03-94.10%, preferably 89.03-93.65%, 90.30-93.20%, 89.03-93.28%;
   the CaO is 5.80-8.40%, preferably 6.25-8.40%, 6.60-8.40%; and
   the MgO is 0-2.52%, preferably 0-2.10%, 0-1.68%.
9. The thermal-insulating refractory material according to any one of items 1-8, wherein the thermal-insulating refractory material is prepared by a method comprising the following steps:
   mixing a granular material and a fine powder to obtain a mixed material, then subjecting the mixed material to hot-pressed sintering to obtain the thermal-insulating refractory material.
10. The thermal-insulating refractory material according to item 9, wherein the fine powder is one or two or more selected from the group consisting of: CaO-containing fine powder, Al₂O₃-containing fine powder, and MgO-containing fine powder;
   preferably the CaO-containing fine powder is one or two or more selected from the group consisting of: quicklime fine powder, limestone fine powder, calcium hydroxide fine powder, CaO·Al₂O₃ fine powder, CaO·2Al₂O₃ fine powder, 12CaO·7Al₂O₃ fine powder, CA6 fine powder, C2M2A14 fine powder and CM2A8 fine powder;
   preferably the Al₂O₃-containing fine powder is one or two or more selected from the group consisting of: active α-Al₂O₃ fine powder, γ-Al₂O₃ fine powder, ρ-Al₂O₃ fine powder, aluminum hydroxide fine powder, industrial alumina fine powder, white corundum fine powder, sub-white corundum fine powder, dense corundum fine powder, sintered corundum fine powder, and tabular corundum fine powder;
   preferably the MgO-containing fine powder is one or two or more selected from the group consisting of: magnesite fine powder, light-calcined magnesia fine powder, brucite fine powder, magnesium hydroxide fine powder, magnesium chloride fine powder, high purity magnesia fine powder, and fused magnesia fine powder.
11. The thermal-insulating refractory material according to item 9 or 10, wherein the granular material is one or two or more selected from the group consisting of: CA6, C2M2A14 and CM2A8, preferably CA6.
12. The thermal-insulating refractory material according to any one of items 9-11, wherein the mass ratio of the granular material to the fine powder is 0-60:40-100.
13. The thermal-insulating refractory material according to any one of items 9-12, wherein the hot-pressed sintering is performed by
   putting the mixed material into a mold of a high temperature device for hot-pressed sintering; or
   molding the mixed material at normal temperature, and then putting it into a mold of a high temperature device for hot-pressed sintering; or
   molding the mixed material at normal temperature, and presintering it at low temperature, and then putting it into a mold of a high temperature device for hot-pressed sintering.
14. The thermal-insulating refractory material according to any one of items 9-13, wherein the temperature of the hot-pressed sintering is 1550-1750°C; preferably the strength of the hot-pressed sintering is 0.5-10 MPa.
15. A preparation method for thermal-insulating refractory material, comprising the following steps:
   mixing a granular material and a fine powder to obtain a mixed material, then subjecting the mixed material to hot-pressed sintering to obtain the thermal-insulating refractory material.
16. The preparation method according to item 15, wherein the fine powder is one or two or more selected from the group consisting of: CaO-containing fine powder, Al₂O₃-containing fine powder, and MgO-containing fine powder;
   preferably the CaO-containing fine powder is one or two or more selected from the group consisting of: quicklime fine powder, limestone fine powder, calcium hydroxide fine powder, CaO·Al₂O₃ fine powder, CaO·2Al₂O₃ fine powder, 12CaO·7Al₂O₃ fine powder, CA6 fine powder, C2M2A14 fine powder and CM2A8 fine powder;
   preferably the Al₂O₃-containing fine powder is one or two or more selected from the group consisting of: active α-Al₂O₃ fine powder, γ-Al₂O₃ fine powder, ρ-Al₂O₃ fine powder, aluminum hydroxide fine powder, industrial alumina fine powder, white corundum fine powder, sub-white corundum fine powder, dense corundum fine powder, sintered corundum fine powder, and tabular corundum fine powder;
   preferably the MgO-containing fine powder is one or two or more selected from the group consisting of: magnesite fine powder, light-calcined magnesia fine powder, brucite fine powder, magnesium hydroxide fine powder, magnesium chloride fine powder, high purity magnesia fine powder, and fused magnesia fine powder.
17. The preparation method according to item 15 or 16, wherein the granular material is one or two or more selected from the group consisting of: CA6, C2M2A14 and CM2A8, preferably CA6.
18. The preparation method according to any one of items 15-17, wherein the mass ratio of the granular material to the fine powder is 0-60:40-100.
19. The preparation method according to any one of items 15-18, wherein the hot-pressed sintering is performed by
   putting the mixed material into a mold of a high temperature device for hot-pressed sintering; or
   molding the mixed material at normal temperature, and then putting it into a mold of a high temperature device for hot-pressed sintering; or
   molding the mixed material at normal temperature, and pre-sintering it at low temperature, and then putting it into a mold of a high temperature device for hot-pressed sintering.
20. The preparation method according to any one of items 15-19, wherein the temperature of the hot-pressed sintering is 1550-1750°C; preferably the strength of the hot-pressed sintering is 0.5-10 MPa.
21. A permanent lining for iron and steel smelting ladles, wherein it comprises the thermal-insulating refractory material according to any one of items 1-14 or the thermal-insulating refractory material prepared by the preparation method according to any one of items 15-20.
22. A thermal-insulating lining or working lining for an aluminum liquid ladle, wherein it comprises the thermal-insulating refractory material according to any one of items 1-14 or the thermal-insulating refractory material prepared by the preparation method according to any one of items 15-20.

### Effect of the invention

This application realizes good sintering of high purity CA6 system material, which has high material strength, heat insulation performance and good corrosion resistance to slag and molten steel. It is very suitable for ladle permanent lining, liquid aluminum lining and other thermal-insulating lining or working lining, some industrial kiln refractory material lining body, etc., with good heat insulation, heat preservation and safety, and remarkable economic and social benefits. The specific effects are detailed below:
(1) The material of this application with high purity and no pollution to smelting materials
   Compared with the corresponding permanent lining material of ladle and liquid aluminum ladle material, the material of this application has higher purity, good high-temperature stability and the total content of Al₂O₃+CaO+MgO≥96.5%.
   Although the material of this application has high purity, the impurities will not be introduced into the solution in the process of smelting steel, aluminum alloy or other alloys, which will not affect the purity and performance of the alloy.
(2) The material with stable structure and performance
   As a high purity raw material system, the sintering of materials is difficult. Therefore, in the present refractory materials, the sintering is basically promoted by introducing additives, combining reactions or generating low melting point liquid phases. This will also lead to uneven material structure: some areas are high purity systems with high melting point and good crystallization, and some are liquid phase regions with complex compositions and low melting point and high temperature performance. The inhomogeneity of the structure leads to its creep and slip at high temperature, decrease of material properties and increase of thermal conductivity.
   The material of this application is not based on the generation of low melting point liquid phase to promote sintering. Therefore, there is no low melting point liquid phase, no creep and slip of microstructure, and the performance of the material is stable. At the same time, there is no deterioration in the performance of materials in different service stages, which is not possessed by traditional materials.
(3) Good corrosion resistance to metal melt and slag, etc.
   Because the material system is a high purity system, and the structure of the material is not based on the sintering promoted by the liquid phase of low melting point, the material structure is uniform and there is no weak point to resist the erosion of slag. Therefore, the overall erosion resistance of the material of the present application is good to metal melt and slag, and the safety characteristics of permanent lining can be guaranteed.
(4) Low thermal conductivity
   Due to the lamellar structure of CA6, the thermal conductivity of CA6-based materials is relatively low, which is important for permanent linings with thermal-insulating properties.

### Brief description of drawings

Fig. 1 is a schematic diagram of the thermal-insulating refractory material obtained by Example 1 of the present application and the CA6 castable obtained by Comparative Example 1 after 1500 °C treatment. Wherein, Fig. A is a schematic diagram of the thermal-insulating refractory material obtained by Example 1 after 1500 °C treatment, and Fig. B is a schematic diagram of the CA6 castable obtained by Comparative Example 1 after 1500 °C treatment.
Fig. 2 is a profile diagram of the thermal-insulating refractory material obtained by Example 1 of the present application after being corroded by slag at 1500 °C .
Fig. 3 is a profile diagram of CA6 castable obtained by Comparative Example 1 after being corroded by slag at 1500 °C .

### Detailed description of the invention

The following is a detailed explanation of the present application in conjunction with the embodiments described in the accompanying drawings, where the same numbers in all drawings represent the same features. Although specific embodiments of the present application are shown in the accompanying drawings, it should be understood that the present application can be implemented in various forms and should not be limited by the embodiments described here. On the contrary, these embodiments are provided for thoroughly understanding of the present application and to fully convey the scope of the present application to those skilled in the art.

It should be noted that certain terms are used in the specification and claims to refer to specific components. It should be understood by those skilled in the art that they may use different terms to refer to the same component. This specification and claims do not use differences in nouns as a way to distinguish components, but rather use differences in the function of components as a criterion for distinguishing components. The words "comprises" or "includs" mentioned throughout the entire specification and claims are open-ended terms, they should be interpreted as "including but not limited to". The subsequent description of the specification is a preferred embodiment for implementing the present application. However, the description is intended as the general principles of the specification and is not intended to limit the scope of the present application. The scope of protection of the present application shall be determined by the appended claims.

The present application provides a CA6-based thermal-insulating refractory material with medium bulk density, the phase of the thermal-insulating refractory material comprises CA6 and one or two or more selected from C2M2A14, CM2A8, magnesium aluminum spinel, and corundum.

The phase is a phase with specific physical and chemical properties in a substance.

Among them, C2M2A14 refers to 2CaO·2MgO·14Al₂O₃.

CM2A8 refers to CaO·2MgO·8Al₂O₃.

The phase of the thermal-insulating refractory material is determined by XRD. For example, the measured material is ground to below 325 mesh, and then scanning with an X-ray diffractometer. By analyzing the diffraction data and matching it with the standard PDF card, the relevant phases are obtained, and then the content of the relevant phases is obtained by full spectrum fitting of the diffraction data.

In a preferred embodiment of the present application, wherein based on the mass percentage in the thermal-insulating refractory material, the total content of CA6, C2M2A14, CM2A8, corundum and magnesium-aluminum spinel is ≥ 90%, preferably 94.8-99.5%.

For example, based on the mass percentage in the thermal-insulating refractory material, the total content of CA6, C2M2A14, CM2A8, magnesium aluminum spinel, and corundum can be 90%, 91%, 92%, 93%, 94%, 95%, 96%, 96.2%, 96.55%, 96.6%, 96.8%, 97.1%, 97.5%, 97.7%, 97.8%, 97.9%, 98%, 98.05%, 98.95%, 99.15%, 100%, or any range between them.

In a preferred embodiment of the present application, wherein based on the mass percentage of the phase in the thermal-insulating refractory material, the phase content of CA6 is 26.7-100%, preferably 29.0-100%, more preferably 31.5-100%, still more preferably 31.5-99.5%, further preferably 38.7-99.5%, respectively;
The phase content of C2M2A14 is 0-72%, preferably 0-60%;
the phase content of CM2A8 is 0-72%, preferably 0-60%, further preferably 0-59.5%;
the phase content of magnesium alumina spinel is 0-10%, 0-8.0%, 0-4.60%, 0-4.0%, preferably 0, and
the phase content of corundum is 0-30%, preferably 0-18%, more preferably 0-16.5%, further preferably 0-15%, most preferably 0-12%.

For example, based on the mass percentage of the phase in the thermal-insulating refractory material, the phase content of CA6 can be 26.7%, 28%, 30%, 35%, 40%, 45%, 50%, 55%, 60%, 65%, 70%, 75%, 80%, 85%, 90%, 95%, 97.8%, 99.5%, 100% or any range in between;
the phase content of C2M2A14 can be 0, 5%, 10%, 15%, 20%, 24.5%, 25%, 30%, 35%, 35.2%, 40%, 45%, 50%, 55%, 60%, 65%, 70%, 71%, 72%, or any range in between;
the phase content of CM2A8 can be 0, 5%, 10%, 15%, 20%, 24%, 25%, 30%, 35%, 40%, 45%, 50%, 55%, 60%, 65%, 70%, 71%, 72% or any range in between;
the phase content of corundum can be 0, 5%, 10%, 12%, 15%, 18%, 20%, 25%, 30% or any range in between; and
the phase content of magnesium aluminate spinel can be 0, 1%, 2%, 3%, 4%, 4.60%, 5%, 6%, 7%, 8%, 9%, 10% or any range in between.

In a prefered embodiment of the present application, the chemical composition of the thermal-insulating refractory material comprises Al₂O₃, CaO and MgO, based on the mass percentage in the thermal-insulating refractory material,
The Al₂O₃ is 86.65-94.10%, preferably 87.60-94.10%, 86.65-92.80%, more preferably 88.07-94.10%, 87.50-92.60%;
The CaO is 5.80-8.40%, preferably 6.10-8.40%, 6.89-8.40%; and
The MgO is 0-6.05%, preferably 0-5.53%, 0-5.43%, 0-5.04%.

Based on the mass percentage in the thermal-insulating refractory material, Al₂O₃ can be 86.65%, 87.60%, 88%, 89%, 90%, 91%, 92%, 93%, 94%, 94.10% or any range in between;
CaO can be 5.80%, 6.0%, 7.0%, 8.0%, 8.40%, or any range in between; and
MgO can be 0, 1.0%, 2.0%, 3.0%, 4.0%, 5.0%, 5.60%, 6.05% or any range between them.

The chemical composition of the thermal-insulating refractory material is analyzed by fluorescence (XRF) and determined according to GB/T 21114-2007.

In one preferred embodiment of the present application, the bulk density of the thermal-insulating refractory is 2.40-2.90 g/cm³, preferably 2.40-2.82 g/cm³.

For example, the bulk density of the thermal-insulating refractory can be 2.40 g/cm³, 2.50 g/cm³, 2.55 g/cm³, 2.60 g/cm³, 2.70 g/cm³, 2.80 g/cm³, 2.90 g/cm³ or any range in between.

The bulk density of the thermal-insulating refractory material is determined in accordance with GB/T2997-2000.

In a preferred embodiment of the present application, the phase of the matrix part of the thermal-insulating refractory material comprises CA6 and one or two or more selected from corundum, magnesium-aluminum spinel, C2M2A14 and CM2A8.

Wherein the matrix part of the thermal-insulating refractory material refers to a part of the thermal-insulating refractory material that does not comprise granular material.

The phase of the matrix part of the thermal-insulating refractory material is determined by the micro-area diffraction using XRD.

The operation method is as follows: for example, seven different samples can be selected and seven samples can be cut from them; the micro-area diffraction of each sample is carried out, and the spectrum is full spectrum fitted to determine the content of each phase; the two data with large deviation are removed, and then the phase content of the remaining five samples is averaged to obtain the phase content of the thermal-insulating refractory material matrix. In order to ensure accurate analysis and small deviation, the selected matrix area should be maximized during sample preparation and scanning.

In a preferred embodiment of the present application, wherein based on the mass percentage of the phase of the matrix part in the thermal-insulating refractory material, the phase content of CA6 is 67.4-100%, preferably 72.5-100%, 78.2-100%, 78.8-100%;
the phase content of corundum is 0-30%, preferably 0-20%, 0-25%;
the phase content of magnesium aluminate spinel is 0-10%, 0-8.0%, 0-6.7%, 0-5.22%, preferably 0;
the phase content of C2M2A14 is 0-30%, preferably 0-25%, 0-20%, 0-18.8%; and
the phase content of CM2A8 is 0-30%, preferably 0-25%, 0-20%, 0-18.8%.

For example, based on the mass percentage of the phase of the matrix part in the thermal-insulating refractory material, the phase content of CA6 can be 67.4%, 70%, 75%, 80%, 85%, 90%, 95%, 98.5%, 100%, or any range in between;
the phase content of corundum can be 0, 5%, 10%, 15%, 20%, 25%, 30% or any other country in between;
the phase content of magnesium aluminate spinel can be 0, 1%, 2%, 3%, 4%, 4.85%, 5.22%, 6%, 7%, 8%, 9%, 10% or any range in between;
the phase content of C2M2A14 can be 0, 5%, 10%, 15%, 20%, 25%, 30% or any range in between; and
the phase content of CM2A8 can be 0, 5%, 10%, 15%, 20%, 25%, 28.4%, 30%, or any range in between.

In a preferred embodiment of the present application, the chemical composition of the matrix part of the thermal-insulating refractory comprises Al₂O₃, CaO and MgO, based on the mass percentage of the matrix part in the thermal-insulating refractory material, Al₂O₃ is 89.03-94.10%, preferably 89.03-93.65%, 90.30-93.20%, 89.03-93.28%;
CaO is 5.80-8.40%, preferably 6.25-8.40% and 6.60-8.40%; and
MgO is 0-2.52%, preferably 0-2.10% and 0-1.68%.

For example, based on the mass percentage of the matrix part in the thermal-insulating refractory material, Al₂O₃ can be 89.03%, 90.55%, 91.00%, 91.10%, 91.20%, 91.30%, 91.40%, 91.50%, 91.60%, 91.70%, 91.80%, 91.90%, 92.00%, 92.10%, 92.20%, 92.30%, 92 40%, 92.50%, 92.60%, 92.70%, 92.80%, 92.90%, 93.00%, 93.10%, 93.20%, 93.30%, 93.40%, 93.50%, 93.60%, 93.70%, 93.80%, 93.90%, 94.00%, 94.10% or any range in between;

CaO can be 5.80%, 5.85%, 5.90%, 6.00%, 6.10%, 6.20%, 6.30%, 6.40%, 6.50%, 6.60%, 6.70%, 6.80%, 6.90%, 7.00%, 7.10%, 7.20%, 7.30%, 7.40%, 7.50%, 7.60%, 7.70%, 7.80%, 7.90%, 8.00%, 8.10%, 8.20%, 8.30%, 8.40% or any range in between;

MgO can be 0, 1.00%, 1.10%, 1.20%, 1.30%, 1.40%, 1.48%, 1.50%, 1.60%, 1.70%, 1.80%, 1.90%, 2.00%, 2.10%, 2.20%, 2.30%, 2.52% or any range between them.

The chemical composition of the matrix part of the thermal-insulating refractory material is determined by elemental analysis, that is, EDS analysis, of the matrix part in the sample under an electron microscope.

Preferably, the method comprises the following steps: selecting 10 different samples, cutting out more than 12 samples, and surface polishing; putting each polished sample under an electron microscope to select a matrix part and an appropriate size of the rectangular area for element collection; calculating the content of the chemical composition after the element content is converted into oxide; removing the two data with large deviation, and averaging content of Al₂O₃, CaO and MgO of 10 samples to obtain the chemical composition of the matrix part of the thermal-insulating refractory matrix. In order to ensure the accuracy of chemical composition and small deviation, the selected rectangular area should be maximized during element collection.

In a preferred embodiment of the present application, wherein the thermal-insulating refractory is prepared by a method comprising the following steps:
mixing a granular material and a fine powder to obtain a mixed material, then subjecting the mixed material to hot-pressed sintering to obtain the thermal-insulating refractory material.

The granular material refers to the part that cannot be screened through a 180 mesh square hole sieve (Xinxiang Zhongtuo Mechanical Equipment Co., LTD.), that is, the part left on the 180-mesh square hole sieve. The particle size of the granular material is 180 mesh -8 mm.

The fine powder refers to a part through the 180 mesh square hole screen, that is, the part under the screen of the 180 mesh square hole screen, whose particle size is less than 180 mesh.

The hot-pressed sintering refers to a way to achieve material sintering under the combined action of applying pressure and temperature.

In one preferred embodiment of the present invention, the fine powder is one or two or more selected from the group consisting of: CaO-containing fine powder, Al₂O₃-containing fine powder, and MgO-containing fine powder;
preferably, the CaO-containing fine powder is one or two or more selected from the group consisting of: quicklime, limestone, calcium hydroxide, CaO·Al₂O₃, CaO·2Al₂O₃(CA2), 12CaO·7Al₂O₃(C12A7), CA6, C2M2A14 and CM2A8;
preferably, the Al₂O₃-containing fine powder is one or two or more selected from the group consisting of: active α-Al₂O₃ powder, γ-Al₂O₃ powder, ρ-Al₂O₃ powder, aluminum hydroxide, industrial alumina, white corundum powder, sub-white corundum powder, dense corundum powder, sintered corundum powder and tabular corundum powder;
preferably, the MgO-containing fine powder is one or two or more selected from the group consisting of: magnesite, light-calcined magnesia, brucite, magnesium hydroxide, magnesium chloride, high purity magnesia and fused magnesia;
wherein the CaO containing fine powder refers to a fine powder whose chemical composition comprises CaO, or comprises CaO, and Al₂O₃, or comprises CaO, MgO, and Al₂O₃.

The Al₂O₃-containing fine powder refers to an alumina system fine powder whose chemical composition is mainly Al₂O₃.

The MgO-containing fine powder refer to a fine powder whose chemical composition is mainly MgO or Mg(OH)₂.

The quicklime, also known as calcined lime, is mainly composed of calcium oxide. It is usually prepared by calcining natural rocks, which are mainly composed of calcium carbonate, at high temperatures to decompose and generate carbon dioxide and calcium oxide (chemical formula: CaO, also known as quicklime, or marble).

The active α-Al₂O₃ powder is an alumina powder with high activity(which is mainlyα-Al₂O₃), obtained by processing industrial alumina or aluminum hydroxide as a raw material at 1250-1450°C.

The γ -Al₂O₃ powder is an alumina powder with a higher specific surface area and better adsorption properties, obtained by treating aluminum hydroxide as a raw material at high temperatures.

The ρ-Al₂O₃ powder is an alumina powder with a certain hydration binding properties obtained by rapid high-temperature treatment at 600-900 °C using aluminum hydroxide as the raw material.

The industrial alumina is a alumina mineral prepared from aluminum hydroxide as raw material and calcined at 900-1250 °C.

The white corundum powder is an aluminum oxide raw material prepared from industrial aluminum oxide as a raw material by electric melting, with a content of over 97.5% in Al2O3. It also comprises a small amount of iron oxide, silicon oxide, and other components, and is white in color.

The sub-white corundum powder is produced from bauxite as a raw material. Because its chemical composition and physical properties are close to those of white corundum, it is called sub-white corundum. The product with the hardness of white corundum and the toughness of brown corundum, is an ideal high-grade refractory material and grinding material.

The sintered corundum powder refers to a refractory clinker made from alumina as raw material, finely ground into pellets or billets, and sintered at 1750-1900 °C. It has a high bulk density, low porosity, and excellent thermal shock resistance and slag erosion resistance at high temperatures.

The tabular corundum powder has a coarsely crystallized and well-developed α-Al₂O₃ crystal structure, with an Al2O3 content of over 97.0%. It has a tabular crystal structure with small pores and many closed pores.

The light-calcined magnesia is a magnesia raw material with high activity and magnesite phase, which is prepared by calcining magnesite (whose mainl component is magnesium carbonate) at 800-1000°C.

The brucite is a raw material with Mg(OH)₂ as its main component.

The high purity magnesia is a sintered magnesia raw material with MgO content ≥96.5%, which is made from light-calcined magnesia by ball pressing and high temperature calcination.

The fused magnesia is a dense magnesia material with MgO content ≥ 96.5%, which is prepared from light-calcined magnesia or magnesite by arc melting.

In a preferred embodiment of the present application, when using one or more fine powders containing CaO selected from the group consisting of quicklime, limestone, calcium hydroxide, CaO·Al₂O₃, CaO·2Al₂O₃, and 12CaO·7Al₂O₃ (the CA6 or CMA phases or other phases cannot be formed by relying on these CaO-containing fine powders alone) as raw materials for the source of CaO components in the matrix and not satisfying the phase and chemical composition of matrix of the product, the fine powder further comprises the Al₂O₃-containing fine powder, or the Al₂O₃-containing fine powder and MgO-containing fine powder, which is determined by the the phase and chemical composition of the products.

When the MgO-containing fine powder is used(the CA6 or CMA phases or other phases cannot be formed by relying on MgO-containing fine powders alone) and if the phase and chemical composition of matrix of the product cannot be satisfied by relying on these MgO-containing fine powders alone, the fine powder further comprises the Al₂O₃-containing fine powder or the Al₂O₃-containing fine powder and CaO-containing fine powder, which is determined by the phases and chemical composition of the product.

When the Al₂O₃-containing fine powder is used and if the phase and chemical composition of matrix of the product cannot be satisfied by relying on these Al₂O₃-containing fine powders alone, the fine powder comprises the CaO-containing fine powder or the MgO-containing fine powder or the CaO-containing fine powder and MgO-containing fine powder, which is determined by the phase and chemical composition of the product.

In a preferred embodiment of the present application, wherein the granular material is one or two or more selected from the group consisting of: CA6, C2M2A14 and CM2A8, preferably CA6.

In a preferred embodiment of the present application, wherein the mass ratio of the granular material to the fine powder is 0-60:40-100.

For example, the mass ratio of the granular material to the fine powder (i.e., the granular material/the fine powder) may be 0, 1/99, 2/98, 3/97, 4/96, 5/95, 6/94, 7/93, 8/92, 9/91, 10/90, 11/89, 12/88, 13/87, 14/86, 15/85, 16/84, 17/83, 18/82, 19/81, 20/80, 21/79, 22/78, 23/77, 24/76, 25/75, 26/74, 27/73, 28/72, 29/71, 30/70, 31/69, 32/68, 33/67, 34/66, 35/65, 36/64, 37/63, 38/62, 39/61, 40/60, 41/59, 42/58, 43/57, 44/56, 45/55, 46/54, 47/53, 48/52, 49/51, 50/50, 51/49, 52/48, 53/47, 54/46, 55/45, 56/44, 57/43, 58/42, 59/41, 60/40 or any range in between.

In a preferred embodiment of the present application, the hot-pressed sintering is performed by putting the mixed material into a mold of a high temperature device for hot-pressed sintering or molding the mixed material at normal temperature and then putting it into a mold of a high temperature device for hot-pressed sintering or molding the mixed material at normal temperature, and pre-sintering it at low temperature, and then putting it into a mold of a high temperature device for hot-pressed sintering.

For example, putting the mixed material into a mold of a high temperature device for hot-pressed sintering means that the mixed material is put into a mold of a high temperature device to raise the temperature, and when the temperature rises to the highest temperature, the pressure is applied until sintering is complete; or the mixed material is put into a mold of a high temperature device to raise the temperature, and when the temperature rises to a certain temperature and the pressure is applied; then the temperature is gradually increased and the applied pressure is increased at the same time until the temperature and pressure reach the maximum to complete the hot-pressed sintering of the material; or the mixed is put into a mold of a high temperature device, The pressure applied on the mixed material is gradually increased while the temperature is increased until the temperature and pressure reach the maximum to complete the hot-pressed sintering of the material

Molding the mixed material at normal temperature, and then putting it into a mold of a high temperature device for hot-pressed sintering means that the mixed material is pressed into billets or pre-fabricated into billets at normal temperature, dried and then for hot-pressed sintering. The method of hot-pressed sintering is the same as described above.

Molding the mixed material at normal temperature, and pre-sintering it at low temperature, and then putting it into a mold of a high temperature device for hot-pressed sintering means that the mixed material is pressed or pre-molded at low temperature and pre-sintered at 1350-1500 °C, and then put into a mold of a high temperature device for hot-pressed sintering.

The high temperature device is a commonly used high temperature device in this field, such as a hot press furnace.

In a preferred embodiment of the present application, the temperature of hot-press sintering is 1550-1750 °C, preferably the strength of the hot-pressed sintering is 0.5-10 MPa. For example, the temperature can be 1550 °C, 1600 °C, 1650 °C, 1700 °C, 1750 °C or any range in between;

For example, the strength of the hot-pressed sintering can be 0.5 MPa, 1 MPa, 1.5 MPa, 2 MPa, 2.5 MPa, 3 MPa, 3.5 MPa, 4 MPa, 4.5 MPa, 5 MPa, 5.5 MPa, 6 MPa, 6.5 MPa, 7 MPa, 7.5 MPa, 8 MPa, 8.5 MPa, 9 MPa, 9.5 MPa, 10 MPa, or any range in between.

The application provides a preparation method for thermal-insulating refractory material, which comprises the following steps:
mixing a granular material and a fine powder to obtain a mixed material, then subjecting the mixed material to hot-pressed sintering to obtain the thermal-insulating refractory material.

In a preferred embodiment of the present application, wherein the mass ratio of the granular material to the fine powder is 0-60:40-100.

In a preferred embodiment of the present application, wherein the hot-pressed sintering is performed by
putting the mixed material into a mold of a high temperature device for hot-pressed sintering; or
molding the mixed material at normal temperature, and then putting it into a mold of a high temperature device for hot-pressed sintering; or
molding the mixed material at normal temperature, and pre-sintering it at low temperature, and then putting it into a mold of a high temperature device for hot-pressed sintering.

In one preferred embodiment of the present application, the temperature is 1550-1750 °C, preferably the strength of the hot-pressed sintering is 0.5-10 MPa.

The CA6-based thermal-insulating refractory material with medium bulk density obtained by the present application realizes good sintering of high purity CA6 system material and has high material strength. The obtained thermal-insulting refractory material has a uniform microstructure, more uniform heat insulation performance and strength, good resistance to slag and molten steel erosion ability, which is very suitable for ladle permanent lining, liquid aluminum and other thermal-insulating lining or working lining, some industrial kiln refractory material lining body, etc., with good heat insulation, heat preservation and safety, and remarkable economic and social benefits.

The present invention provides a permanent lining for iron and steel smelting ladle, which comprises the thermal-insulating refractory material mentioned above or the thermal-insulating refractory material prepared by the preparation method mentioned above.

The present application provides a thermal-insulating lining or working lining for an aluminum liquid ladle, which comprises the thermal-insulating refractory material mentioned above or the thermal-insulating refractory material prepared by the preparation method mentioned above.

### Examples

The present application provides a general and/or specific description of the materials and test methods used in the test. In the examples below, unless otherwise specified, % represents wt.%, which is the mass percentage. The raw materials or instruments used are conventional raw material products which can be obtained through market if the manufacturer is not indicated. Wherein table 1 shows the quality of raw materials used in the examples.

**Table 1 the quality of raw materials used in the examples.**

| Name of raw material | Content of main component | Bulk density (g/cm³) | Manufacturers |
|---|---|---|---|
| CA6 fine powder | Al₂O₃ 90.5-92.5%, CaO 7.4-9.0% | ≥0.8 | Luzhong Refractory Materials Co. Ltd |
| Tabular corundum fine powder | Al₂O₃≥97.0% | ≥3.50 | Anmai Aluminum Co. Ltd |
| γ-Al₂O₃ fine powder | Al₂O₃≥96.0% | 1.10 | Shandong Aluminum Co. Ltd |
| Light calcined magnesia | MgO≥92.5% | - | - |
| Limestone powder | CaO≥53.0% | - | - |
| CA6 granule material | Al₂O₃ 90.5-92.5%, CaO 7.4-9.0% | ≥1.50 | Luzhong Refractory Materials Co. Ltd |
| Industrial alumina fine powder | Al₂O₃≥96.0% | - | Shandong Aluminum Co. Ltd |
| Fused magnesia | MgO≥96.0% | ≥3.45 | Jiamei Refractory Materials Co. Ltd |
| ρ-Al₂O₃ fine powder | Al₂O₃≥93.5% | - | Shandong Aluminum Co. Ltd |
| CM2A8 granule material | Al₂O₃ 85.0-86.5%, CaO 5.1-6.5%, MgO 7.8-9.0% | ≥2.20 | Luzhong Refractory Materials Co. Ltd |
| Quicklime fine powder | CaO≥91.5% | - | Jiamei Refractory Materials Co. Ltd |
| High purity magnesia | MgO≥96.5% | ≥3.25 | Jiamei Refractory Materials Co. Ltd |
| White corundum fine powder | Al₂O₃≥97.5% | ≥3.45 | Zhengzhou Yufa Group |
| Active α-Al₂O₃ powder | Al₂O₃≥97% | - | Shandong Aluminum Co. Ltd |
| CM2A8 fine powder | Al₂O₃ 85.0-86.5%, CaO 5.1-6.5%, MgO 7.8-9.0% | ≥1.50 | Luzhong Refractory Materials Co. Ltd |
| • Dense corundum powder | Al₂O₃≥97% | ≥3.85 | Zhengzhou Yufa Group |
| 12CaO·7Al₂O₃ fine powder | Al₂O₃ 51.0-52.0%, CaO 48.0-49.0% | ≥2.60 | Luzhong Refractory Materials Co. Ltd |
| C2M2A14 granule material | Al₂O₃ 87.3-89.0%, CaO 6.0-7.5%, MgO 4.0-5.5% | ≥2.20 | Luzhong Refractory Materials Co. Ltd |
| C2M2A14 fine powder | Al₂O₃ 87.3-89.0%, CaO 6.0-7.5%, MgO 4.0-5.5% | ≥1.50 | Luzhong Refractory Materials Co. Ltd |
| Sub-white corundum powder | Al₂O₃≥96.5% | ≥3.75 | Luoyang Jade Co. Ltd |

### Example 1

(1) 500g of CA6 granule material (the largest particle is 5mm) and 500g of CA6 fine powder were mixed evenly to obtain a mixed material;
(2) The mixed material was put into a mold of a high temperature device for direct hot-pressed sintering. When the temperature was raised to the highest temperature of 1630 °C, and the pressure of the hot-pressed sintering strength of 5 MPa was applied under this temperature, the refractory materials with medium bulk density was prepared.

The phase of the refractory material was analyzed by using XRD analysis, that is, the obtained refractory material was ground to less than 325 mesh, and then scanned by using X-ray diffractometer (Bruker: D8 Advance); by analyzing the diffraction data and matching it with the standard PDF card, the correlation phase was obtained; then, the content of the correlation phase was obtained through the full spectrum fitting of the diffraction data and the phase was mainly CA6. Based on the mass percentage of the phase of the refractory material, the phase content of CA6 was 99.5%.

The chemical composition of the refractory material was analyzed by fluorescence (XRF) analysis and determined in accordance with GB/T21114-2007. Based on the mass percentage of the refractory material, the chemical composition comprised 91.04% of Al₂O₃ and 8.40% of CaO.

The phase analysis of the matrix part of the refractory material was measured by the micro-area diffraction using XRD, that is, 12 pieces of different refractory materials were selected and 12 samples were cut out; In each sample, the matrix region with uniform color and organizational structure was selected for micro-region diffraction, and the diffraction pattern was full spectrum fitted to determine the content of each phase; two data with large deviation were removed, and then the phase content of the remaining ten samples was averaged to obtain the phase content of the matrix part of the refractory material. The phase of the matrix part of the refractory material mainly comprised CA6, and based on the mass percentage of the phase of the matrix part of the refractory material, the phase content of the CA6 was 99.2%.

The analysis is used to determine the chemical composition of the matrix part of the refractory was measured by using EDS method, that is, 12 pieces of different refractory materials were selected, and 12 samples were cut out and surface was polished; each polished sample was put under an electron microscope to select the region with more uniform organizational structure in the matrix part, and a rectangular region with appropriate size was selected in this region for element collection; after convering the collected element contents into oxides, the chemical composition content was calculated; the two data with large deviation were removed, and then the average contents of Al₂O₃, CaO and MgO of the remaining 10 samples were taken as the chemical composition of the matrix part of the refractory material; based on the mass percentage of the matrix part of the refractory material, the chemical composition of the matrix part of the refractory material comprised 91.20% Al₂O₃ and 8.40% CaO.

The CA6-based refractory material with medium bulk density was measured in accordance with GB/T2997-2000 and the bulk density was 2.54 g/cm³.

According to the standard YB/T4130-2005, the thermal conductivity of the refractory material obtained in Example 1 was 0.61 w/m·k at 350 °C.

The prepared material was made into a crucible, steel slag was put into the crucible. The temperature was heated to 1500 °C and kept for 3 h. Then the cooled sample is cut along the middle, and the thickness of the sample eroded by steel slag was measured to be 3.12 mm.

### Example 2

(1) 400 g of CA6 granule material (the maximum particle size is 3mm), 280 g of CA6 fine powder, 188 g of γ-Al₂O₃ powder, 122g of tabular corundum powder and 23 g of Ca(OH)₂ fine powder were mixed evenly to obtain a mixed material;
(2) the mixed material was pressed and molded at normal temperature and light-calcined at 1500 °C, and then put into a mold of a high temperature device. The pressure was gradually applied since the temperature was raised to 1550 °C. When the maximum temperature was raised to 1720 °C, and the maximum strength of hot-pressed sintering is 1 MPa, the refractory material with medium bulk density was prepared.

The phase analysis was carried out according to the same method as Example 1, and the phase of the refractory material with medium bulk density comprised CA6 and corundum. Based on the mass percentage of the phase of the refractory material, the phase content of CA6 is 86.50%, and the phase content of the corundum is 12%.

The chemical composition analysis was carried out according to the same method as in Example 1. Based on the mass percentage of the refractory material, the chemical composition of the refractory material with medium bulk density obtained comprised 92.60% of Al₂O₃ and 6.72% of CaO.

The phase analysis of the matrix part was carried out according to the same method as in Example 1, and the phase of the matrix part of the refractory material comprised CA6 and corundum. Based on the mass percentage of the phase of the matrix part in the refractory material, the phase content of CA6 is 78.8%, and the phase content of the corundum is 20%.

The chemical composition analysis of the matrix part was carried out according to the same as in Example 1. Based on the mass percentage of the matrix part of the refractory material, the chemical composition of the matrix part of the refractory material comprised 93.28% of Al₂O₃ and 6.60% of CaO.

The bulk density analysis was carried out according to the same method as in Example 1, and the bulk density of the refractory material with medium bulk density was 2.55 g/cm³.

The analysis was carried out according to the same method as in Example 1, the thermal conductivity of the obtained refractory material was 1.02 w/m·k at 350 °C.

According to the same method as in Example 1, the erosion thickness of the refractory material was 2.87 mm.

### Example 3

(1) 500 g of CA6 granule material (the maximum particle size is 3mm), 400 g of CA6 fine powder and 100 g of C2M2A14 powder were mixed evenly to obtain a mixed material;
(2) the mixed is put in a mold of a high temperature device for hot-pressed sintering directly. When the temperature was raised to a maximum temperature of 1630 °C, and the hot-press sintering strength of 3 MPa was applied under this temperature, the refractory material with medium bulk density was prepared.

The phase analysis was carried out according to the same method as in Example 1, and the phase of the refractory material with medium bulk density comprised CA6 and C2M2A14. Based on the mass percentage of the phase of the refractory material, the phase content of CA6 is 89.12%, and the phase content of C2M2A14 is 9.4%.

The chemical composition analysis was carried out according to the same method as in Example 1. Based on the mass percentage of the refractory material, the chemical composition of the refractory material with medium bulk density comprised 91.03% of Al₂O₃, 0.43% of MgO, and 8.02% of CaO.

The phase analysis of the matrix part was carried out according to the same method as in Example 1, and the phase of the matrix part of the refractory material comprised CA6 and C2M2A14. Wherein according to the mass percentage of the phase of the matrix part in the refractory material, the phase content of CA6 was 78.2% and the phase content of C2M2A14 was 18.8%.

The chemical composition analysis of the matrix part was carried out according to the same method as in Example 1, and based on the mass percentage of the matrix part of the refractory material, the chemical composition of the matrix part of the refractory material comprised 90.8% of Al₂O₃, 0.8% of MgO, and 8.0% of CaO.

The bulk density analysis was carried out according to the same method as in Example 1, and the bulk density of the refractory material with medium bulk density wass 2.55 g/cm³.

The analysis was carried out according to the same method as in Example 1, and the thermal conductivity of the obtained refractory material was 0.95w/m·k at 350 °C.

According to the same method as in Example 1, the erosion thickness of the refractory material was 3.66 mm.

### Example 4

(1) 500 g of CA6 granule material (the maximum particle size is 3mm), 400 g of CA6 fine powder 85.8 g of industrial aluminum oxide powder, 8.6 g of high purity magnesia powder, and 7.8 g of calcium hydroxide powder were evenly mixed to obtain a mixed material;
(2) the mixed material was put into a mold of a high temperature device for direct hot-pressed sintering. When the temperature was raised to a maximum temperature of 1650 °C, and the hot-pressed sintering strength of 8 MPa was applied under this temperature, the refractory material with medium bulk density was prepared.

The phase analysis was carried out according to the same method as in Example 1, and the phase of the refractory material with medium bulk density comprised CA6 and CM2A8. Based on the mass percentage of the phase of said refractory material, the phase content of CA6 was 89.04% and the phase content of CM2A8 was 9.4%.

The chemical composition analysis was carried out according to the same method as in Example 1, and based on the mass percentage of the refractory material, the chemical composition of the refractory material with medium bulk density comprised 90.34% of Al₂O₃, 0.78% of MgO and 7.86% of CaO.

The phase analysis of the matrix part was carried out according to the same method as in Example 1, and the phase of the matrix part of the refractory material comprised CA6 and CM2A8. Based on the mass percentage of the matrix part of the refractory material, the phase content of CA6 was 78.2% and the phase content of CM2A8 was 18.8%.

The chemical composition analysis of the matrix part was carried out according to the same method as in Example 1, and according to the mass percentage of the matrix part of the refractory material, the chemical composition of the matrix part of the refractory material comprised of 90.30% of Al₂O₃, 1.68% of MgO, and 7.81% of CaO.

The bulk density analysis was carried out according to the same method as in Example 1, and the bulk density of the refractory material with medium bulk density was 2.53 g/cm³.

The analysis was carried out according to the same method as in Example 1, and the thermal conductivity of the obtained refractory material was 0.96 w/m·k at 350 °C.

According to the same method as in Example 1, the erosion thickness of the refractory material was 3.70 mm.

### Example 5

(1) 200 g of CA6 granule material (the maximum particle size is 3mm), 200 g of C2M2A14 granule material (the maximum particle size is 3mm), 540 g of CA6 fine powder, 4.3 g of quicklime powder , 3.05 g of fused magnesia and 54 g of white corundum fine powder were evenly mixed to obtain a mixed material;
(2) the mixed was put into a mold of a high temperature device for direct hot-pressed sintering. When the temperature was raised to the temperature of 1710 °C, and the hot-press sintering strength of 2 MPa was applied under this temperature, the refractory material with medium bulk density was prepared.

The phase analysis was carried out according to the same method as in Example 1, and the phase of the refractory material with medium volume comprised CA6 and CM2A8. Based on the mass percentage of the phase of the refractory material, the phase content of CA6 was 71.30% and the phase content of CM2A8 was 23.5%.

The chemical composition analysis was carried out according to the same method as in Example 1, and based on the mass percentage of the refractory material, the chemical composition of the refractory material with medium bulk density comprised 88.67% of Al₂O₃, 1.03% of MgO and 7.64% of CaO.

According to the same method as in Example 1, the phase analysis of the matrix part was carried out. The phase of the matrix part of the refractory material comprised CA6 and CM2A8, and based on the mass percentage of the phase of the matrix part in the refractory material, the phase content of CA6 was 87.2% and the phase content of CM2A8 was 8.3%.

The chemical composition analysis of the matrix part was carried out according to the same method as in Example 1, and based on the mass percentage of the matrix part of the refractory material, the chemical composition of the matrix part of the refractory material comprised 89.03% of Al₂O₃, 0.35% of MgO, and 7.95% of CaO.

The bulk density analysis was carried out according to the same method as in Example 1, and the bulk density of the refractory material with medium bulk density was 2.55 g/cm³.

The analysis was carried out according to the same method as in Example 1, and the thermal conductivity of the obtained refractory material was 0.84 w/m·k at 350 °C.

According to the same method as in Example 1, the erosion thickness of the refractory material was 3.64 mm.

### Example 6

(1) 600 g of CM2A8 granule material (the maximum particle size is 3mm), 220 g of CA6 fine powder, 176 g of dense corundum fine powder, and 15.63 g of CaCO₃ fine powder were evenly mixed to obtain a mixed material;
(2) the mixed material was put into a mold of a high temperature device for direct hot-pressed sintering. When the temperature was raised to a maximum temperature of 1700 °C, and the hot-pressed sintering strength of 4.5 MPa was applied under this temperature, the refractory material with medium bulk density was prepared.

According to the same method as in Example 1, the phase analysis was carried out. The phase of the refractory material with medium bulk density comprises CA6, corundum and CM2A8. Based on the mass percentage of the phase of the refractory material, the phase content of CA6 was 31.5%, the phase content of corundum was 7.78% and the phase content of CM2A8 was 58.4%.

The chemical composition analysis was carried out according to the same method as in Example 1, and based on the mass percentage of the refractory material, the chemical composition of the refractory material with medium bulk density comprised 87.92% of Al₂O₃, 4.82% of MgO and 6.10% of CaO.

According to the same method as in Example 1, the phase analysis of the matrix part was carried out. The phase of the matrix part of the refractory material comprised CA6 and corundum. Wherein based on the mass percentage of the phase of the matrix part in the refractory material, the phase content of CA6 was 78.8% and the phase content of corundum was 20%.

The chemical composition analysis of the matrix part was carried out according to the same method as in Example 1, and based on the mass percentage of the matrix part of the refractory material, the chemical composition of the matrix part of the refractory material comprised 93.28% of Al₂O₃, and 6.60% of CaO.

The bulk density analysis was carried out according to the same method as in Example 1, and the bulk density of the refractory material with medium bulk density was 2.55 g/cm³.

The analysis was carried out according to the same method as in Example 1, the thermal conductivity of the obtained refractory material was 1.32 w/m·k at 350 °C.

According to the same method as in Example 1, the erosion thickness of the refractory material was 3.72 mm.

### Example 7

(1) 835 g of CA6 fine powder, 60 g of tabular corundum fine powder, 110 g of ρ-Al₂O₃ fine powder were evenly mixed to obtain a mixed material;
(2) The mixture was pre-molded with water, dried and put in a mold of a high temperature device for heating. When the temperature was raised to a maximum of 1650 °C, and the hot-pressed sintering strength of 6 MPa was applied at this temperature, the CA6-based refractory material with medium bulk density was prepared.

According to the same method as in Example 1, the phase analysis was carried out. The phase of the refractory material with medium bulk density comprised CA6 and corundum. Based on the mass percentage of the phase of the refractory material, the phase content of CA6 was 82.0% and the phase content of corundum was 16.5%.

The chemical composition analysis was carried out according to the same method as in Example 1, and based on the mass percentage of the refractory material, the chemical composition of the refractory material with medium bulk density comprised 91.6% of Al₂O₃ and 6.92% of CaO.

According to the same method as in Example 1, the phase analysis of the matrix part of the refractory material was carried out. The phase of the matrix part of the refractory material comprised CA6 and corundum. Based on the mass percentage of phase of the matrix part in the refractory material, the phase content of CA6 was 82.0% and the phase content of corundum was 16.5%.

The chemical composition analysis of the matrix part was carried out according to the same method as in Example 1, and based on the mass percentage of the phase of the matrix part in the refractory material, the chemical composition of the matrix part of the refractory material comprised 91.60% of Al₂O₃ and 6.92% of CaO.

The bulk density analysis was carried out according to the same method as in Example 1, and the bulk density of the refractory material with medium bulk density was 2.52 g/cm³.

The analysis was carried out according to the same method as in Example 1, the thermal conductivity of the obtained refractory material was 0.9 w/m·k at 350 °C.

According to the same method as in Example 1, the erosion thickness of the refractory material was 4.48 mm.

### Example 8

(1) 800 g of CA6 fine powder, 100 g of tabular corundum fine powder, and 105 g of ρ-Al₂O₃ fine powder were mixed evenly to obtain a mixed material;
(2) the mixed material was pre-molded with water, dried and put into a mold of a high temperature device for hot-pressed sintering. When the temperature was raised to a maximum of 1600 °C, and the hot-pressed sintering strength of 8 MPa was applied at this temperature, the CA6-based refractory material with medium bulk density was prepared.

According to the same method as in Example 1, the phase analysis was carried out. The phase of the refractory material with medium bulk density comprised CA6 and corundum. Based on the mass percentage of the phase of the refractory material, the phase content of CA6 was 78.6% and the phase content of corundum was 20%.

The chemical composition analysis was carried out according to the same as in Example 1, and based on the mass percentage of the refractory material, the chemical composition of the refractory material with medium bulk density comprised 92.4% of Al₂O₃ and 6.52% of CaO.

According to the same method as in Example 1, the phase analysis of the matrix part was carried out. The phase of the matrix part of the refractory material comprised CA6 and corundum. Based on the mass percentage of the phase of the matrix part in the refractory material, the phase content of CA6 was 78.6% and the phase content of corundum was 20%.

The chemical composition analysis of the matrix part was carried out according to the same method as in Example 1, and based on the mass percentage of the matrix part of the refractory material, the chemical composition of the matrix part of the refractory material comprised 92.4% of Al₂O₃ and 6.52% of CaO.

The bulk density analysis was carried out according to the same method as in Example 1, and the bulk density of the refractory material with medium bulk density was 2.52 g/cm³.

The analysis was carried out according to the same method as in Example 1, the thermal conductivity of the obtained refractory material was 0.92 w/m·k at 350 °C.

According to the same method as in Example 1, the erosion thickness of the refractory material was 4.34 mm.

### Example 9

(1) 600 g of C2M2A14 granular material (the maximum particle size is 5 mm), 85.7g of CA6 fine powder, 308 g of aluminum hydroxide fine powder, 18.8 g of CaO fine powder and 100 g of CM2A8 fine powder were mixed evenly to obtain a mixed material;
(2) the mixed material was pressed and molded at normal temperature and light-calcined at 1450 °C, and then put in a mold of a high temperature device for hot-pressed sintering. When the temperature was raised to a maximum temperature of 1600 °C, and the hot-pressed sintering strength of 3.8 MPa was applied at this temperature, the refractory material with medium bulk density was prepared.

The phase analysis was carried out in accordance with the same method as in Example 1, and the phase of the refractory material with medium bulk density comprised CA6, C2M2A14 and CM2A8. Based on the mass percentage of the phase of the refractory material, the phase content of CA6 was 29.0%, the phase content of C2M2A14 was 60% and the phase content of CM2A8 was 8.41%.

The chemical composition analysis was carried out according to the same method as in Example 1, and based on the mass percentage of the refractory material, the chemical composition of the refractory material with medium bulk density comprised 87.7% of Al₂O₃, 3.74% of MgO and 6.68% of CaO.

The phase analysis of the matrix part was carried out according to the same method as in Example 1, and the phase of the matrix part of the refractory material comprised CA6 and CM2A8. Based on the mass percentage of the phase of the refractory content, the phase content of CA6 was 72.5% and the phase content of CM2A8 was 25.0%.

The chemical composition analysis of the matrix part was carried out according to the same method as in Example 1, and based on the mass percentage of the matrix part of the refractory material, the chemical composition of the matrix part of the refractory material comprised 89.03% of Al₂O₃, 2.10% of MgO and 7.02% of CaO.

The bulk density analysis was carried out according to the same method as in Example 1, and the bulk density of the refractory material with medium bulk density was 2.55 g/cm³.

The analysis was carried out according to the same method as in Example 1, and the thermal conductivity of the obtained refractory material was 1.42 w/m·k at 350 °C.

According to the same method as in Example 1, the erosion thickness of the refractory material was 4.21 mm.

### Example 10

(1) 600 g of CM2A8 granule material (the maximum particle size is 5m), 200 g of CA6 fine powder, 100g of C2M2A14 powder, 95 g of industrial alumina powder, and 8.7 g of CaO powder were mixed to obtain a mixed material;
(2) the mixed material was put into a mold of a high temperature device for hot-pressed sintering directly. When the temperature was raised to a maximum temperature of 1690 °C, and the hot-pressed sintering strength of 3.4 MPa was applied at this temperature, the refractory material with medium bulk density was prepared.

According to the same method as in Example 1, the phase analysis was carried out. The phase of the refractory material with medium bulk density comprised CA6, C2M2A14 and CM2A8. Based on the mass percentage of the phase of the refractory material, the phase content of CA6 was 29%, the phase content of C2M2A14 was 9.07% and the phase content of CM2A8 was 60%.

The chemical composition analysis was carried out according to the same method as in Example 1, and based on the mass percentage of the refractory material, the chemical composition of the refractory material with medium bulk density comprised 86.65% of Al₂O₃, 5.53% of MgO and 6.22% of CaO.

The phase analysis of the matrix part was carried out according to the same method as in Example 1, and the phase of the matrix part of the refractory material comprised CA6 and C2M2A14. Based on the mass percentage of the phase of the matrix part in the refractory material, the phase content of CA6 was 72.5% and the phase content of C2M2A14 was 25.0%.

The chemical composition analysis of the matrix part was carried out according to the same method as in Example 1, and based on the mass percentage of the matrix part of the refractory material, the chemical composition of the matrix part of the refractory material comprised 89.06% of Al₂O₃, 1.20% of MgO and 7.64% of CaO.

The bulk density analysis was carried out according to the same method as in Example 1, and the bulk density of the refractory material with medium bulk density was 2.55 g/cm³.

The analysis was carried out according to the same method as in Example 1, the thermal conductivity of the obtained refractory material was 1.48 w/m·k at 350 °C.

According to the same method as in Example 1, the erosion thickness of the refractory was 4.28 mm.

### Example 11

(1) 600 g of CM2A8 granular material (the maximum particle size is 3mm), 200 g of CA6 fine powder, 280.2 g of aluminum hydroxide fine powder and 22.2 g of calcium hydroxide fine powder were evenly mixed to obtain a mixed material;
(2) the mixed material was pressed and molded at normal temperature and then put into a mold of a high temperature device. The pressure was gradually applied from the temperature rising at normal temperature. When the temperature was raised to a maximum temperature of 1700 °C, and the maximum strength of the hot-pressed sintering was 2 MPa, the refractory material with medium bulk density was prepared.

According to the same method as in Example 1, the phase analysis of the refractory material with medium bulk density was carried out. The phase of the refractory material with medium bulk density comprised CA6 and CM2A8. Based on the mass percentage of the phase of the refractory material, the phase content of CA6 was 38.7% and the phase content of CM2A8 was 59.5%.

The chemical composition analysis was carried out according to the same method as in Example 1, and based on the mass percentage of the refractory material, the chemical composition of the refractory material with medium bulk density comprised 88.07% of Al₂O₃, 5.04% of MgO and 6.89% of CaO.

The phase analysis of the matrix part was carried out according to the same method as in Example 1, and the phase of the matrix part of the refractory material comprised CA6. Based on the mass percentage of the phase of the matrix part in the refractory material, the phase content of CA6 was 98.7%.

The chemical composition analysis of the matrix part was carried out according to the same method as in Example 1. Based on the mass percentage of the matrix part of the refractory material, the chemical composition of the matrix part of the refractory material comprised 90.5% of Al₂O₃, and 8.40% of CaO.

The bulk density analysis was carried out according to the same method as in Example 1, and the bulk density of the refractory material with medium bulk density was 2.65 g/cm³.

The analysis was carried out according to the same method as in Example 1, the thermal conductivity of the obtained refractory material was 1.12 w/m·k at 350 °C.

According to the same method as in Example 1, the erosion thickness of the refractory material was 3.67 mm.

### Embodiment 12

(1) 600 g of C2M2A14 granular material (the maximum particle size is 3mm) and 500 g of CA6 fine powder were evenly mixed to obtain a mixed material;
(2) the mixed material was put into a mold of a high temperature device for hot-pressed sintering directly. When the temperature was raised to 1400 °C, the pressure was gradually applied. When the temperature was raised a maximum temperature of 1720 °C, and the maximum strength of the hot-pressed sintering was 10 MPa, the refractory material with medium bulk density was prepared.

According to the same method as in Example 1, the phase analysis was carried out. The phase of the refractory material with medium bulk density comprised CA6 and C2M2A14. Based on the mass percentage of the phase of the refractory material, the phase content of CA6 was 38.7% and the phase content of C2M2A14 was 60%.

The chemical composition analysis was carried out according to the same method as in Example 1, and based on the mass percentage of the refractory material, the chemical composition of the refractory material with medium bulk density comrpised 89.32% of Al₂O₃, 2.74% of MgO and 7.41% of CaO.

The phase analysis of the matrix part was carried out according to the same method as in Example 1, and the phase of the matrix part of the refractory material comprised CA6. Based on the mass percentage of the phase of the matrix part in the refractory material, the phase content of CA6 was 100%.

The chemical composition analysis of the matrix part was carried according to the same method as in Example 1, and based on the mass percentage of the matrix part of the refractory material, the chemical composition of the matrix part of the refractory material comprised 90.8% of Al₂O₃, and 8.40% of CaO.

The bulk density analysis was carried out according to the same method as in Example 1, and the bulk density of the refractory material with medium bulk density was 2.82 g/cm³.

The analysis was carried out according to the same method as in Example 1, the thermal conductivity of the obtained refractory material was 1.55 w/m·k at 350 °C.

According to the same method as in Example 1, the erosion thickness of the refractory material was 3.08 mm.

### Example 13

(1) 700 g of CA6 fine powder, 150 g of tabular corundum fine powder, 155 g of ρ-Al₂O₃ fine powder and 8.7 g of CaO fine powder were evenly mixed to obtain a mixed material;
(2) the mixed material was pre-molded with water, dried and put into a mold of a high temperature device for heating. When the temperature was raised to a maximum of 1550 °C, and the hot-pressed sintering strength of 10 MPa was applied at this temperature, the refractory material with medium bulk density was prepared.

According to the same method as in Example 1, the phase analysis was carried out. The phase of the refractory material with medium bulk density comprised CA6 and corundum. Based on the mass percentage of the phase of the refractory material, the phase content of CA6 was 67.4% and the phase content of corundum was 30%.

The chemical composition analysis was carried out according to the same method as in Example 1, and based on the mass percentage of the refractory material, the chemical composition of the refractory material with medium bulk density comprised 94.10% of Al₂O₃ and 5.80% of CaO.

According to the same method as in Example 1, the phase analysis of the matrix part was carried out. The phase of the matrix part of the refractory material comprised CA6 and corundum. Based on the mass percentage of the phase of the matrix part in the refractory material, the phase content of CA6 was 67.4% and the phase content of corundum was 30%.

The chemical composition analysis of the matrix part was carried out according to the same method as in Example 1, and based on the mass percentage of the matrix part of the refractory material, the chemical composition of the matrix part of the refractory material comprised 94.10% of Al₂O₃ and 5.80% of CaO.

The bulk density analysis was carried out according to the same method as in Example 1, and the bulk density of the refractory material with medium bulk density is 2.52 g/cm³.

The analysis was carried out according to the same method as in Example 1, the thermal conductivity of the obtained refractory material was 1.02 w/m·k at 350 °C.

According to the same method as in Example 1, the erosion Example of the refractory material was 4.55 mm.

### Example 14

(1) 600 g of CM2A8 granular material (the maximum particle size is 3 mm), 320 g of CA6 fine powder and 80 g of CM2A8 fine powder were evenly mixed to obtain a mixed material;
(2) the mixed material was pressed and molded at normal temperature, and put into a mold of a high temperature device for hot-pressed sintering. When the temperature was raised to a maximum temperature of 1670 °C, and the hot-pressed sintering strength of 0.5 MPa was applied at this temperature, the refractory material with medium bulk density was prepared.

According to the same method as in Example 1, the phase analysis was carried out. The phase of the refractory material with medium bulk density comprised CA6 and CM2A8. Based on the mass percentage of the phase of the refractory material, the phase content of CA6 was 31.5% and the phase content of CM2A8 was 67.1%.

The chemical composition analysis was carried out according to the same method as in Example 1, and based on the mass percentage of the refractory material, the chemical composition of the refractory material with medium bulk density comprised 87.60% of Al₂O₃, 5.62% of MgO and 6.43% of CaO.

The phase analysis of the matrix part was carried out according to the same method as in Example 1, and the phase of the matrix part of the refractory material comprised CA6 and CM2A8. Based on the mass percentage of the phase of the matrix part in the refractory material, the phase content of CA6 was 78.2% and the phase content of C2M2A14 was 19.2%.

The chemical composition analysis of the matrix part was carried out according to the same method as in Example 1, and based on the mass percentage of the matrix part of the refractory material, the chemical composition of the matrix part of the refractory material comprised 90.3% of Al₂O₃, 1.68% of MgO and 7.82% of CaO.

The bulk density analysis was carried out according to the same method as in Example 1, and the bulk density of the refractory material with medium bulk density was 2.63 g/cm³.

The analysis was carried out according to the same method as in Example 1, the thermal conductivity of the obtained refractory material was 1.29 w/m·k at 350 °C.

According to the same method as in Example 1, the erosion thickness of the refractory material was 4.06 mm.

### Example 15

(1) 947.4 g of CA6 fine powder, 15 g of fused magnesite fine powder and 38 g of active α-Al₂O₃ fine powder were evenly mixed to obtain a mixed material;
(2) the mixed was pressed and molded at normal temperature and light-calcined at 1350 °C, and then put into a mold of a high temperature device for hot-pressed sintering. When the temperature was raised to 1500 °C, the pressure was applied. When the temperature was raised to a maximum temperature of 1580 °C, and the maximum strength of the hot-pressed sintering was 5 MPa, the refractory material with medium bulk density was prepared.

According to the same method as in Example 1, the phase analysis was carried out. The phase of the refractory material with medium bulk density comprised CA6 and C2M2A14. Based on the mass percentage of the phase of the refractory material, the phase content of CA6 was 67.4% and the phase content of C2M2A14 was 30%.

The chemical composition analysis was carried out according to the same method as in Example 1. Based on the mass percentage of the refractory material, the chemical composition of the refractory material with medium bulk density comprised 89.32% of Al₂O₃, 1.38% of MgO and 7.81% of CaO.

The bulk density analysis was carried out according to the same method as in Example 1, and the bulk density of the refractory material with medium bulk density was 2.48 g/cm³.

The analysis was carried out according to the same method as in Example 1, and the thermal conductivity of the obtained refractory material was 1.00 w/m·k at 350 °C.

According to the same method as in Example 1, the erosion thickness of the refractory material was 5.60 mm.

### Example 16

(1) 600 g of CM2A8 granular material (the maximum particle size is 8 mm), 80 g of CA6 fine powder, 281 g of aluminum hydroxide fine powder, 17.5 g of quick lime fine powder and 120 g of CM2A8 fine powder were evenly mixed to obtain a mixed material;
(2) the mixed was pressed and molded at normal temperature and light-calcined at 1400 °C, and then put into a mold of a high temperature device for hot-pressed sintering. When the temperature was raised to 1500 °C, the pressure was applied gradually. The pressure was gradually increased while the temperature was increased. When the temperature was raised to a maximum temperature of 1750 °C, and the maximum strength of the hot-pressed sintering was 0.5 MPa, the refractory material with medium bulk density was prepared.

According to the same method as in Example 1, the phase analysis was carried out. The phase of the refractory material with medium bulk density comprised CA6 and CM2A8. Based on the mass percentage of the phase of the refractory material, the phase content of CA6 was 26.7% and the phase content of CM2A8 was 72%.

The chemical composition analysis was carried out according to the same method as in Example 1, and based on the mass percentage of the refractory material, the chemical composition of the refractory material with medium bulk density comprised 86.65% of Al₂O₃, 6.05% of MgO and 6.22% of CaO.

The phase analysis of the matrix part was carried out according to the same method as in Example 1, and the phase of the matrix part of the refractory material comprised CA6 and CM2A8. Based on the mass percentage of the phase of the refractory material, the phase content of CA6 was 68% and the phase content of CM2A8 was 30%.

The chemical composition analysis of the matrix part was carried out according to the same method as in Example 1, and based on the mass percentage of the matrix part of the refractory material, the chemical composition of the matrix part of the refractory material comprised 89.03% of Al₂O₃, 2.52% of MgO and 7.60% of CaO.

The bulk density analysis was carried out according to the same method as in Example 1, and the bulk density of the refractory material with medium bulk density was 2.90g/cm³.

The analysis was carried out according to the same method as in Example 1, and the thermal conductivity of the obtained refractory material was 1.71 w/m·k at 350 °C.

According to the same method as in Example 1, the erosion thickness of the refractory material was 2.94 mm.

### Example 17

(1) 100 g of C2M2A14 granular material (the maximum particle size is 1 mm), 630 g of CA6 fine powder, 18.7 g of quick lime fine powder, 13.4 g of high purity magnesia, 180 g of white-corundum fine powder and 58 g of active α-Al₂O₃ fine powder were evenly mixed to obtain a mixed material;
(2) the mixed was pressed and molded at normal temperature and light-calcined at 1450 °C, and then put into a mold of a high temperature device for hot-pressed sintering. When the temperature was raised to 1500 °C, the pressure was applied gradually. When the temperature was raised to a maximum temperature of 1620 °C, and the maximum strength of the hot-pressed sintering was 8 MPa, the refractory material with medium bulk density was prepared.

According to the same method as in Example 1, the phase analysis was carried out. The phase of the refractory material with medium bulk density comprised CA6, C2M2A14 and MgO·Al₂O₃. Based on the mass percentage of the phase of the refractory material, the phase content of CA6 was 84.2%, the phase content of C2M2A14 was 9.28% and the phase content of MgO·Al₂O₃ was 4.60%.

The chemical composition analysis was carried out according to the same method as in Example 1, and based on the mass percentage of the refractory material, the chemical composition of the refractory material with medium bulk density comprised 89.14% Al₂O₃, 1.71% MgO and 7.65% CaO.

The phase analysis of the matrix part was carried out according to the same method as in Example 1, and the phase of the matrix part of the refractory material comprised CA6 and MgO·Al₂O₃. Based on the mass percentage of the phase of the matrix part in the refractory material, the phase content of CA6 was 93.5% and the phase content of MgO·Al₂O₃ was 5.22%.

The chemical composition analysis of the matrix part was carried out according to the same method as in Example 1, and based on the mass percentage of the matrix part of the refractory material, the chemical composition of the matrix part of the refractory material comprised 90.07% Al₂O₃, 1.32% MgO and 7.67% CaO.

The bulk density analysis was carried out according to the same method as in Example 1, and the bulk density of the refractory material with medium bulk density was 2.57g/cm³.

The analysis was carried out according to the same method as in Example 1, and the thermal conductivity of the obtained refractory material was 1.15 w/m·k at 350 °C.

According to the same method as in Example 1, the erosion thickness of the refractory material was 5.04mm.

### Example 18

(1) 700 g of CA6 fine powder, 150 g of tabular corundum fine powder and 155 g of ρ-Al₂O₃ fine powder were evenly mixed to obtain a mixed material;
(2) the mixed material is pre-mold with water, dried and put into a mold of a high temperature device for heating. When the temperature was raised to 1550 °C, and the hot-pressed sintering strength of 10 MPa was applied at this temperature, the refractory material with medium bulk density was prepared.

According to the same method as in Example 1, the phase analysis was carried out. The phase of the refractory material with medium bulk density comprised CA6 and corundum. Based on the mass percentage of the phase of refractory material, the phase content of CA6 was 66.4% and the phase content of corundum was 30%.

The chemical composition analysis was carried out according to the same method as in Example 1, and based on the mass percentage of the refractory material, the chemical composition of the refractory material with medium bulk density comprised 94.10% of Al₂O₃ and 5.80% of CaO.

The bulk density analysis was carried out according to the same method as in Example 1, and the bulk density of the refractory material with medium bulk density was 2.52 g/cm³.

The analysis was carried out according to the same method as in Example 1, and the thermal conductivity of the obtained refractory material was 1.02 w/m·k at 350 °C.

According to the same method as in Example 1, the erosion thickness of the refractory material was 4.55 mm.

### Example 19

(1) 600 g of C2M2A14 granular material (the maximum particle size is 10 mm), 280 g of CA6 fine powder and 120 g of C2M2A14 fine powder were evenly mixed to obtain a mixed material;
(2) the mixed is put into a mold of a high temperature device for hot-pressed sintering. The pressure was gradually applied from the temperature rising at room temperature. When the temperature was raised to a maximum temperature of 1610 °C, and the maximum strength of hot press sintering was 6 MPa, the refractory material with medium bulk density was prepared.

According to the same method as in Example 1, the phase analysis was carried out. The phase of the refractory material with medium bulk density comprised CA6 and C2M2A14. Based on the mass percentage of the phase of the refractory, the phase content of CA6 was 26.7% and the phase content of C2M2A14 was 72%.

The chemical composition analysis was carried out according to the same method as in Example 1, and based on the mass percentage of the refractory, the chemical composition of the refractory material with medium bulk density comprised 88.87% of Al₂O₃, 3.36% of MgO and 7.16% of CaO.

The phase analysis of the matrix part was carried out according to the same method as in Example 1, and the phase of the matrix part of the refractory material comprised CA6 and C2M2A14. Based on the mass percentage of the phase of the matrix part in the refractory material, the phase content of CA6 was 68.1% and the phase content of C2M2A14 was 30%.

The chemical composition analysis of the matrix part was carried out according to the same method as in Example 1, and based on the mass percentage of the phase if the matrix part in the refractory material, the chemical composition of the matrix part of the refractory material comprised 90.46% of Al₂O₃, 1.31% of MgO and 7.82% of CaO.

The bulk density analysis was carried out according to the same method as in Example 1, and the bulk density of the refractory material with medium bulk density was 2.60 g/cm³.

The analysis was carried out according to the same method as in Example 1, and the thermal conductivity of the obtained refractory material was 1.21 w/m·k at 350 °C.

According to the same method as in Example 1, the erosion thickness of the refractory material was 4.9 mm.

### Example 20

(1) 400 g of CA6 granular material (the maximum particle size is 3 mm), 280 g of CA6 fine powder, 184 g of γ-Al₂O₃ powder, 120 g of tabular corundum powder and 22.2 g Ca(OH)₂ fine powder were evenly mixed to obtain a mixed material;
(2) the mixed was pressed and molded at normal temperature and light-calcined at 1500 °C, and then put into a mold of a high temperature device for hot-press sintering. When the temperature was raised to 1550 °C, the pressure was applied gradually. When the temperature was raised to a maximum temperature of 1750 °C, and the maximum strength of the hot-pressed sintering was 6 MPa, the refractory material with medium bulk density was prepared.

According to the same method as in Example 1, the phase analysis was carried out. The phase of the refractory material with medium bulk density comprised CA6 and corundum. Based on the mass percentage of the phase of the refractory material, the phase content of CA6 was 85.5% and the phase content of corundum was 11.8%.

The chemical composition analysis was carried out according to the same method as in Example 1, and based on the mass percentage of the refractory material, the chemical composition of the refractory material with medium bulk density comprised 92.03% of Al₂O₃ and 7.81% of CaO.

The phase analysis of the matrix part was carried out according to the same method as in Example 1, and the phase of the matrix part of the refractory material comprised CA6 and corundum. Based on the mass percentage of the phase of the matrix in the refractory material, the phase content of CA6 was 77.2% and the phase content of corundum was 20%.

The chemical composition analysis of the matrix part was carried out according to the same method as in Example 1, and based on the mass percentage of the matrix part of the refractory material, the chemical composition of the matrix part of the refractory material comprised 93.2% of Al₂O₃ and 6.61% of CaO.

The bulk density analysis was carried out according to the same method as in Example 1, and the bulk density of the refractory material with medium bulk density was 2.90 g/cm³.

The analysis was carried out according to the same method as in Example 1, and the thermal conductivity of the obtained refractory material was 1.67 w/m·k at 350°C.

According to the same method as in Example 1, the erosion thickness of the refractory was 2.73 mm.

### Example 21

(1) 100 g of C2M2A14 granular material (the maximum particle size is 1 mm), 324 g of CA6 fine powder, 53 g of quick lime fine powder, 28.5 g of high purity magnesia powder, 400 g of white corundum fine powder and 108 g of active α-Al₂O₃ fine powder were evenly mixed to obtain a mixed material;
(2) the mixed material was pressed and molded at normal temperature and light-calcined at 1450 °C, and then put into a mold of a high temperature device for hot-pressed sintering. When the temperature was raised to 1500 °C, the pressure was applied gradually. When the temperature was raised to a maximum temperature of 1550 °C, and the maximum strength of the hot-pressed sintering was 1 MPa, the refractory material with medium bulk density was prepared.

According to the same method as in Example 1, the phase analysis was carried out. The phase of the refractory material with medium bulk density comprised CA6, C2M2A14 and MgO·Al₂O₃. Based on the mass percentage of the phase of the refractory material, the phase content of CA6 was 70.7%, the phase content of C2M2A14 was 9.28% and the phase content of MgO·Al₂O was 10.0%.

The chemical composition analysis was carried out according to the same word as in Example 1, and based on the mass percentage of the refractory material, the chemical composition of the refractory material with medium bulk density comprised 88.5% of Al₂O₃, 3.02% of MgO and 7.21% of CaO.

The phase analysis of the matrix part was carried out according to the same method as in Example 1, and the phase of the matrix part of the refractory material comprised CA6 and MgO·Al₂O₃. Based on the mass percentage of the phase of matrix part of the refractory material, the phase content of CA6 was 78.6% and the phase content of MgO·Al₂O₃ was 11.2%.

The chemical composition analysis of the matrix part was carried out according to the same method as in Example 1, and based on the mass percentage of the matrix part of the refractory material, the chemical composition of the matrix part of the refractory material comprised 89.3% of Al₂O₃, 2.95% of MgO and 7.20% of CaO.

The bulk density analysis was carried out according to the same method as in Example 1, and the bulk density of the refractory materiawith medium bulk density was 2.85 g/cm³.

The analysis was carried out according to the same method as in Example 1, and the thermal conductivity of the obtained refractory material was 1.96 w/m·k at 350 °C.

According to the same method as in Example 1, the erosion thickness of the refractory material was 4.83 mm.

### Example 22

(1) 600 g of C2M2A14 granular material (the maximum particle size is 3 mm), 220 g of CA6 fine powder, 165.8 g of industrial alumina powder, 6.9 g of high purity magnesia powder and 18 g of aluminum hydroxide powder were evenly mixed to obtain a mixed material;
(2) the mixed material was pressed and molded at normal temperature and light-calcined at 1450 °C, and then put into a mold of a high temperature device for hot-pressed sintering. The pressure is gradually applied from the temperature rising at room temperature. When the temperature was rasied to a maximum temperature of 1730 °C, and the maximum strength of the hot-press sintering was 1.5 MPa, the refractory material with medium bulk density was prepared.

According to the same method as in Example 1, the phase analysis was carried out. The phase of the refractory material with medium bulk density comprised CA6, C2M2A14 and CM2A8. Based on the mass percentage of the phase of the refractory material, the phase content of CA6 was 31.5%, the phase content of C2M2A14 was 60% and the phase content of CM2A8 was 7.48%.

The chemical composition analysis was carried out according to the same method as in Example 1, and based on the mass percentage of the refractory material, the chemical composition of the refractory material with medium bulk density comprised 88.08% Al₂O₃, 3.41% MgO and 7.15% CaO.

The phase analysis of the matrix part was carried out according to the same method as in Example 1, and the phase of the matrix part of the refractory material comprised CA6 and CM2A8. Based on the mass percentage of the phase of the refractory material, the phase content of CA6 was 78.8% and the phase content of CM2A8 was 20%.

The chemical composition analysis of the matrix part was carried out according to the same method as in Example 1, and based on the mass percentage of the matrix part of the refractory material, the chemical composition of the matrix part of the refractory material comprised 89.03% Al₂O₃, 1.68% MgO and 7.74% CaO.

The bulk density analysis was carried out according to the same method as in Example 1, and the bulk density of the refractory material with medium bulk density was 2.55 g/cm³.

The analysis was carried out according to the same method as in Example 1, and the thermal conductivity of the obtained refractory material was 1.23 w/m·k at 350 °C.

According to the same method as in Example 1, the erosion thickness of the refractory material was 3.82 mm.

### Example 23

(1) 600 g of C2MA8 granular material (the maximum particle size is 3 mm), 220 g of CA6 fine powder, 80 g of C2M2A14 fine powder, 94 g of active alumina micro powder and 8.75 g of CaO fine powder were evenly mixed to obtain a mixed material;
(2) the mixed material was pressed and molded at normal temperature and then put into a mold of a high temperature device for hot-pressed sintering. When the temperature was raised to a maximum temperature of 1740 °C, the pressure was applied at this temperature, and the strength of the hot-pressed sintering was 0.5 MPa, the refractory material with medium bulk density was prepared.

According to the same method as in Example 1, the phase analysis was carried out. The phase of the refractory material with medium bulk density comprised CA6, C2M2A14 and CM2A8. Based on the mass percentage of the phase of the refractory material, the phase content of CA6 was 31.5%, the phase content of C2M2A14 was 8% and the phase content of CM2A8 was 60%.

The chemical composition analysis was carried out according to the same method as in Example 1, and based on the mass percentage of the refractory material, the chemical composition of the refractory material with medium bulk density comprised 87.50% Al₂O₃, 5.43% MgO and 6.08% CaO.

The phase analysis of the matrix part was carried out according to the same method as in Example 1, and the phase of the matrix part of the refractory material comprised CA6 and C2M2A14. Based on the mass percentage of the phase of the matrix part in the refractory material, the phase content of CA6 was 78.8% and the phase content of C2M2A14 was 20%.

The chemical composition analysis of the matrix part was carried out according to the same method as in Example 1, and based on the mass percentage of the matrix part of the refractory material, the chemical composition of the matrix part of the refractory material comprised 90.60% Al₂O₃, 0.98% MgO and 7.76% CaO.

The bulk density analysis was carried out according to the same method as in Example 1, and the bulk density of the refractory material with medium bulk density was 2.55 g/cm³.

The analysis was carried out according to the same method as in Example 1, and the thermal conductivity of the obtained refractory material was 1.30 w/m·k at 350 °C.

According to the same method as in Example 1, the erosion thickness of the refractory material was 3.84 mm.

### Example 24

(1) 400 g of CA6 granular material (the maximum particle size is 3mm), 450 g of CA6 fine powder, 238.40 g of industrial alumina fine powder, 11.8 g of fused magnesia fine powder and 8.7 g of CaO powder were evenly mixed to obtain a mixed material;
(2) the mixed material was pressed and molded at normal temperature and then put into a mold of a high temperature device for hot-pressed sintering. When the temperature was raised to a maximum temperature of 1740 °C, the pressure was applied at this temperature, and the strength of the hot-pressed sintering was 8 MPa, the refractory material with medium bulk density was prepared.

According to the same method as in Example 1, the phase analysis was carried out. The phase of the refractory material with medium bulk density comprised CA6, corundum and MgO·Al₂O₃. Based on the mass percentage of the phase of the refractory material, the phase content of CA6 was 82.8%, the phase content of corundum was 9.72% and the phase content of MgO·Al₂O₃ was 4.0%.

The chemical composition analysis was carried out according to the same method as in Example 1, and based on the mass percentage of the refractory material, the chemical composition of the refractory material with medium bulk density comprised 89.31% Al₂O₃, 1.14% MgO and 6.92% CaO.

The phase analysis of the matrix part was carried out according to the same method as in Example 1, and the phase of the matrix part of the refractory material comprised CA6, corundum and MgAl₂O₄. Based on the mass percentage of the phase of the matrix part in the refractory material, the phase content of CA6 was 73.8%, the phase content of corundum was 16.3% and the phase content of MgAl₂O₄ was 6.7%.

The chemical composition analysis of the matrix part was carried out according to the same method as in Example 1, and based on the mass percentage of the matrix part of the refractory material, the chemical composition of the matrix part of the refractory material comprised 90.28% Al₂O₃, 1.91% MgO and 6.25% CaO.

The bulk density analysis was carried out according to the same method as in Example 1, and the bulk density of the refractory material with medium bulk density was 2.55 g/cm³.

The analysis was carried out according to the same method as in Example 1, and the thermal conductivity of the obtained refractory material was 1.34 w/m·k at 350 °C.

According to the same method as in Example 1, the erosion thickness of the refractory material was 3.86 mm.

### Embodiment 25

(1) 400 g of CA6 granular material (the maximum particle size is 3 mm), 80 g of 12CaO·7Al₂O₃ fine powder, 384 g of active α-Al₂O₃ micro powder and 154 g of white corundum powder were evenly mixed to obtain a mixed material;
(2) the mixed material was pressed and molded at normal temperature and light-calcined at 1480 °C, and then put into a mold of a high temperature device for hot-pressed sintering. When the temperature was raised to 1600 °C, the pressure was applied gradually. When the temperature was raised to a maximum temperature of 1670 °C, and the maximum strength of the hot-pressed sintering was 5.5 MPa, the refractory material with medium bulk density was prepared.

According to the same method as in Example 1, the phase analysis was carried out. The phase of the refractory material with medium bulk density comprised CA6 and corundum. Based on the mass percentage of the phase of the refractory material, the phase content of CA6 was 82.7% and the phase content of corundum was 15%.

The chemical composition analysis was carried out according to the same method as in Example 1. Based on the mass percentage of the refractory material, the chemical composition of the refractory materialwith medium bulk density comprised 92.80% Al₂O₃ and 6.52% CaO.

The phase analysis of the matrix part was carried out according to the same method as in Example 1, and the phase of the matrix part of the refractory material comprised CA6 and corundum. Based on the mass percentage of the phase of the matrix part in the refractory material, the phase content of CA6 was 72.5% and the phase content of corundum was 25%.

The chemical composition analysis of the matrix part was carried out according to the same method as in Example 1. Based on the mass percentage of the matrix part of the refractory material, the chemical composition of the matrix part of the refractory material comprised 93.65% Al₂O₃ and 6.25% CaO.

The bulk density analysis was carried out according to the same method as in Example 1, and the bulk density of the refractory material with medium bulk density was 2.55 g/cm³.

The analysis was carried out according to the same method as in Example 1, and the thermal conductivity of the obtained refractory material was 1.37 w/m·k at 350 °C.

According to the same method as in Example 1, the erosion thickness of the refractory material was 3.74 mm.

### Example 26

(1) 600 g of C2MA8 granular material (the maximum particle size is 3 mm), 220 g of CA6 fine powder, 144.5 g of tabular corundum fine powder, 52.5 g of ρ-Al₂O₃ fine powder and 8.7 g of CaO fine powder were evenly mixed to obtain a mixed material;
(2) the mixed material was pressed and molded at normal temperature and then put into a mold of a high temperature device for hot-pressed sintering. When the temperature was raised to a maximum temperature of 1680 °C, the pressure was applied at this temperature, and the strength of the hot-pressed sintering was 4.8 MPa, the refractory material with medium bulk density was prepared.

According to the same method as in Example 1, the phase analysis was carried out. The phase of the refractory material with medium bulk density comprised CA6, corundum and CM2A8. Based on the mass percentage of the phase of the refractory material, the phase content of CA6 was 29.0%, the phase content of corundum was 9.15% and the phase content of CM2A8 was 57.5%.

The chemical composition analysis was carried out according to the same method as in Example 1, and based on the mass percentage of the refractory material, the chemical composition of the refractory material with medium bulk density comprised 88.91% Al₂O₃, 4.92% MgO and 5.80% CaO.

The phase analysis of the matrix part was carried out according to the same method as in Example 1, and the phase of the matrix part of the refractory material comprised CA6 and corundum. Based on the mass percentage of the phase of the matrix part in the refractory material, the phase content of CA6 was 73.1% and the phase content of corundum was 25.0%.

The chemical composition analysis of the matrix part was carried out according to the same method as in Example 1, and based on the mass percentage of the matrix part of the refractory material, the chemical composition of the matrix part of the refractory material comprised 93.65% Al₂O₃ and 6.25% CaO.

The bulk density analysis was carried out according to the same method as in Example 1, and the bulk density of the refractory material with medium bulk density was 2.55 g/cm³.

The analysis was carried out according to the same method as in Example 1, and the thermal conductivity of the obtained refractory material was 1.53 w/m·k at 350 °C.

According to the same method as in Example 1, the erosion thickness of the refractory material was 3.98 mm.

### Example 27

(1) 100 g of CA6 granular material (the maximum particle size is 1mm), 630 g of CA6 fine powder, 92 g of sintered corundum powder, 162 g of γ-Al₂O₃ fine powder and 42 g of limestone fine powder were evenly mixed to obtain a mixed material;
(2) the mixed was pressed and molded at normal temperature and then put into a mold of a high temperature device for hot-pressed sintering. When the temperature was raised to 1450 °C, the pressure was applied gradually. When the temperature was raised to a maximum temperature of 1580 °C, and the maximum strength of the hot-pressed strength was 7 MPa, the refractory material with medium bulk density was prepared.

According to the same method as in Example 1, the phase analysis was carried out. The phase of the refractory material with medium bulk density comprised CA6. Based on the mass percentage of the phase of the refractory material, the phase content of CA6 was 100%.

The chemical composition analysis was carried out according to the same method as in Example 1, and based on the mass percentage of the matrix part of the refractory material, the chemical composition of the refractory material with medium bulk density comprised 91.2% Al₂O₃ and 8.40% CaO.

The phase analysis of the matrix part was carried out according to the same method as in Example 1, and the phase of the matrix part of the refractory material comprised CA6. Based on the mass percentage of the phase of the matrix part of the refractory material, the phase content of CA6 was 100%.

The chemical composition analysis of the matrix part was carried out according to the same method as in Example 1, and based on the mass percentage of the matrix part of the refractory material, the chemical composition of the matrix part of the refractory material comprised 91.1% Al₂O₃ and 8.40% CaO.

The bulk density analysis was carried out according to the same method as in Example 1, and the bulk density of the refractory material with medium bulk density was 2.55 g/cm³.

The analysis was carried out according to the same method as in Example 1, and the thermal conductivity of the obtained refractory material was 0.56 w/m·k at 350 °C.

According to the same method as in Example 1, the erosion thickness of the refractory material was 4.66 mm.

### Example 28

(1) 940 g of active alumina fine powder, 24.4 g light-calcined magnesium oxide powder and 80.9 g of Ca(OH)₂ were evenly mixed to obtain a mixed material;
(2) the mixed material was pressed and molded at normal temperature and light-calcined at 1350 °C, and then put into a mold of a high temperature device for hot-pressed sintering. When the temperature was raised to a maximum temperature of 1560 °C, the hot-pressed sintering strength of 9 MPa was applied under this temperature, the refractory material with the medium volume density was prepared.

The phase analysis was carried out according to the same method as in Example 1, and the phase of said refractory material with medium volume density comprised CA6, corundum, and MgAl₂O₄. Based on the mass percentage of the phase of the refractory material, the phase content of CA6 was 61.7%, the phase content of corundum was 20.3%, and the phase content of MgAl₂O₄ was 8%.

The chemical composition analysis was carried out according to the same method as in Example 1, and based on the mass percentage of the refractory material, the chemical composition of the refractory material with medium bulk density comprised 90.4% Al₂O₃, 2.25% MgO and 5.80% CaO.

The bulk density analysis was carried out according to the same method as in Example 1, and the bulk density of the refractory material with medium bulk density was 2.55 g/cm.

The analysis was carried out according to the same method as in Example 1, and the thermal conductivity of the obtained refractory material was 0.95w /m.k at 350C.

According to the same method as in Example 1, the erosion thickness of the refractory was 4.72 mm.

### Example 29

(1) 500 g of CA6 granular material (the maximum particle size is 5mm) and 500 g of CA6 fine were evenly mixed to obtain a mixed material;
(2) the mixed material was put in a mold of a high temperature device for hot-pressed sintering. When the temperature was raised to a maximum temperature of 1620 °C, the pressure was applied, and the maximum strength of the hot-pressed sintering was 3 MPa, the refractory material with medium bulk density was prepared.

According to the same method as in Example 1, the phase analysis was carried out. The phase of the refractory material with medium bulk density comprised CA6. Based on the mass percentage of the phase of the refractory material, the phase content of CA6 was 99.5%.

The chemical composition analysis was carried out according to the same method as in Example 1, and based on the mass percentage of the refractory material, the chemical composition of the refractory material with medium bulk density comprised 91.51% Al₂O₃ and 8.40% CaO.

The phase analysis of the matrix part was carried out according to the same method as in Example 1, and the phase of the matrix part of the refractory material comprised CA6. Based on the mass percentage of the phase of the matrix part in the refractory material, the phase content of CA6 was 100%.

The chemical composition analysis of the matrix part was carried out according to the same method as in Example 1, and based on the mass percentage of the matrix part of the refractory material, the chemical composition of the matrix part of the refractory material comprised 91.52% Al₂O₃ and 8.40% CaO.

The bulk density analysis was carried out according to the same method as in Example 1, and the bulk density of the refractory material with medium bulk density was 2.40 g/cm³.

The analysis was carried out according to the same method as in Example 1, and the thermal conductivity of the obtained refractory material was 0.46 w/m·k at 350 °C.

According to the same method as in Example 1, the erosion thickness of the refractory material was 3.95 mm.

### Example 30

(1) 500 g of CA6 granular material (the maximum particle size is 5 mm) and 500 g of CA6 fine powder were evenly mixed to obtain a mixed material;
(2) the mixed material was put into a mold of a high temperature device for hot-pressed sintering. When the temperature was raised to 1500 °C, the pressure was applied. The pressure was increased gradually while the temperature was increased. When the temperature was raised to a maximum temperature of 1700 °C, and the maximum strength of the hot-press sintering was 4 MPa, the refractory material with medium bulk density was prepared.

According to the same method as in Example 1, the phase analysis ws carried out. The phase of the refractory material with medium bulk density comprised CA6. Based on the mass percentage of the phase of the refractory material, the phase content of CA6 was 100%.

The chemical composition analysis was carried out according to the same method as in Example 1, and based on the mass percentage of the refractory material, the chemical composition of the refractory material with medium bulk density comprised 91.51% Al₂O₃ and 8.39% CaO.

The phase analysis of the matrix part was carried out according to the same method as in Example 1, and the phase of the matrix part of the refractory material comprised CA6. Based on the mass percentage of the phase of the matrix part in the refractory material, the phase content of CA6 was 100%.

The chemical composition analysis of the matrix part was carried out according to the same method as in Example 1, and based on the mass percentage of the matrix part of the refractory material, the chemical composition of the matrix part of the refractory material comprised 91.54% Al₂O₃ and 8.39% CaO.

The bulk density analysis was carried out according to the same method as in Example 1, and the bulk density of the refractory material with medium bulk density was 2.82 g/cm³.

The analysis was carried out according to the same method as in Example 1, and the thermal conductivity of the obtained refractory material was 1.75 w/m·k at 350 °C.

According to the same method as in Example 1, the erosion thickness of the refractory material was 2.41 mm.

### Example 31

(1) 500 g of CA6 granular material (the maximum particle size is 5mm) and 500 g of CA6 fine were evenly mixed to obtain a mixed material;
(2) the mixed material was put into a mold of a high temperature device for hot-pressed sintering. When the temperature was raised to 1500 °C, the pressure was applied gradually. The pressure was increased gradually while the temperature was increased. When the temperature was raised to a maximum temperature of 1750 °C, and the maximum strength of the hot-pressed sintering was 2.5 MPa, the refractory material with medium bulk density was prepared.

According to the same method as in Example 1, the phase analysis was carried out. The phase of the refractory material with medium bulk density comprised CA6. Based on the mass percentage of the phase of the refractory material, the phase content of CA6 was 99.5%.

The chemical composition analysis was carried out according to the same method as in Example 1, and based on the mass percentage of the refractory material, the chemical composition of the refractory material with medium bulk density comprised 91.51% Al₂O₃ and 8.39% CaO.

The phase analysis of the matrix part was carried out according to the same method as in Example 1, and the phase of the matrix part of the refractory material comprised CA6. Based on the mass percentage of the phase of the matrix part in the refractory material, the phase content of CA6 was 99.5%.

The chemical composition analysis of the matrix part was carried out according to the same method as in Example 1, and based on the mass percentage of the matrix part of the refractory material, the chemical composition of the matrix part of the refractory material comprised 91.51% Al₂O₃ and 8.40% CaO.

The bulk density analysis was carried out according to the same method as in Example 1, and the bulk density of the refractory material with medium bulk density was 2.90 g/cm³.

The analysis was carried out according to the same method as in Example 1, and the thermal conductivity of the obtained refractory material was 1.87 w/m·k at 350 °C.

According to the same method as in Example 1, the erosion thickness of the refractory material was 1.85 mm.

### Example 32

(1) 430 g of CA6 fine powder, 29 g of fused magnesia powder, 41.3 g of limestone powder and 518.5 g of white corundum fine powder were evenly mixed to obtain a mixed material;
(2) the mixed material was pressed and molded at normal temperature and light- -calcined at 1450 °C, and then put into a mold of a high temperature device for hot-pressed sintering. When the temperature was raised to 1500 °C, the pressure was applied gradually. When the temperature was raised to a maximum temperature of 1550 °C, and the maximum strength of the hot-pressed sintering was 1 MPa, the refractory material with medium bulk density was prepared.

The phase analysis was carried out according to the same method as in Example 1, and the phase of said refractory with medium volume density comprised CA6 and MgO·Al₂O₃. Based on the mass percentage of the phase of the refractory material, the phase content of CA6 was 86.7% and the phase content of MgO·Al₂O₃ was 10.0%.

The chemical composition analysis was carried out according to the same method as in Example 1, and based on the mass percentage of the refractory material, the chemical composition of the refractory material with medium bulk density comprised 95.72% Al₂O₃, 2.81% MgO and 7.36% CaO.

The bulk density analysis was carried out according to the same method as in Example 1, and the bulk density of the refractory material with medium bulk density was 2.85 g/cm.

The analysis was carried out according to the same method as in Example 1, and the thermal conductivity of the obtained refractory material was 1.57 w /m·k at 350 °C.

According to the same method as in Example 1, the erosion thickness of the refractory material was 4.78 mm.

### Comparative Example 1

The difference between Comparative Example 1 and Example 1 was that the conventional preparation method was used for Comparative Example 1, namely, the method of Example 1 in Chinese patent application CN107500747A was used to obtain refractory materials.

The analysis was carried out according to the same method as in Example 1, and the chemical composition of the refractory material comprised Al₂O₃ CaO. Based on the mass percentage of the refractory material, Al₂O₃ was 92.03% and CaO was 7.12%.

The analysis was carried out according to the same method as in Example 1, and the phase of the refractory material comprised CA6, corundum, CA2 and CA. Based on the mass percentage of the phase of the refractory material, the phase content of CA6 was 68.75%, the phase content of corundum was 24.16%, the phase content of CA2 was 2.32% and the phase content of CA was 2.51%.

The analysis was carried out according to the same method as in Example 1, and the bulk density of the refractory material with medium bulk density was 3.02 g/cm³.

The analysis was carried out according to the same method as in Example 1, and the thermal conductivity of the obtained refractory material was 2.27 w/m·k at 350 °C.

According to the same method as in Example 1, the erosion thickness of the refractory material was 11 mm.

**Table 2 list of the raw materials used in the Examples and Comparative Example, and the refractory material composition**

| | Mass ratio of granular material to fine powder | Phase composition and content (%) | Chemical composition and content (%) | bulk density (g/cm ³) | Phase composition and content of matrix (%) | Chemical composition and content (%) |
|---|---|---|---|---|---|---|
| Example 1 | 50:50 | CA6:99.5 | Al₂O₃:91.04 CaO:8.40 | 2.54 | CA6:99.2 | Al₂O₃:91.2 CaO:8.40 |
| Example 2 | 40:60 | CA6:86.50 Corundum:12 | Al₂O₃:92.60 CaO:6.72 | 2.55 | CA6:78.8 Corundum:20 | Al₂O₃:93.28 CaO:6.60 |
| Example 3 | 50:50 | CA6:89.12 C2M2A14:9.4 | Al₂O₃:91.03 MgO:0.43 CaO:8.02 | 2.55 | CA6:78.2 C2M2A14:18.8 | Al₂O₃:90.8 MgO:0.8 CaO:8.0 |
| Example 4 | 50:50 | CA6:89.04 CM2A8:9.4 | Al₂O₃:90.34 MgO:0.78 CaO:7.86 | 2.53 | CA6:78.2 CM2A8:18.8 | Al₂O₃:90.3 MgO:1.68 CaO:7.81 |
| Example 5 | 40:60 | CA6:71.30 C2M2A14:23.5 | Al₂O₃:88.67 MgO:1.03 CaO:7.64 | 2.55 | CA6:87.2 C2M2A14:8.3 | Al₂O₃:89.03 MgO:0.35 CaO:7.95 |
| Example 6 | 60:40 | CA6:31.5 CM2A8:58.4 Corundum:7.78 | Al₂O₃:87.92 MgO:4.82 CaO:6.10 | 2.55 | CA6:78.8 Corundum:20 | Al₂O₃:93.28 CaO:6.60 |
| Example 7 | Full fine powder | CA6:82.0 Corundum:16.5 | Al₂O₃:91.60 CaO:6.92 | 2.52 | CA6:82.0 Corundum:16.5 | Al₂O₃:91.6 |
| Example 8 | Full fine powder | CA6:78.6 Corundum:20.0 | Al₂O₃:92.4 CaO:6.52 | 2.52 | CA6:78.6 Corundum:20.0 | Al₂O₃:92.4 CaO:6.52 |
| Example 9 | 60:40 | CA6:29.0 C2M2A14:60 CM2A8:8.41 | Al₂O₃:87.7 MgO:3.74 CaO:6.68 | 2.55 | CA6:72.5 CM2A8:25.0 | Al₂O₃:89.03 MgO:2.10 CaO:7.02 |
| Example 10 | 60:40 | CM2A8:60 C2M2A14:9.07 CA6:29 | Al₂O₃:86.65 MgO:5.53 CaO:6.22 | 2.55 | CA6:72.5 C2M2A14:25.0 | Al₂O₃:89.06 MgO:1.20 CaO:7.64 |
| Example 11 | 60:40 | CA6:38.7 CM2A8:59.5 | Al₂O₃:88.07 MgO:5.04 CaO:6.89 | 2.65 | CA6:98.7 | Al₂O₃:90.5 CaO:8.40 |
| Example 12 | 60:40 | C2M2A14:60 CA6:38.7 | Al₂O₃:89.32 MgO:2.74 CaO:7.41 | 2.82 | CA6:100 | Al₂O₃:90.8 CaO:8.40 |
| Example 13 | 0:100 | CA6:67.4 Corundum:30 | Al₂O₃:94.10 CaO:5.80 | 2.55 | CA6:67.4 Corundum:30 | Al₂O₃:94.10 CaO:5.80 |
| Example 14 | 60:40 | CM2A8:67.1 CA6:31.5 | Al₂O₃:87.6 MgO:5.62 CaO:6.43 | 2.63 | CA6:78.2 CM2A8:19.2 | Al₂O₃:90.3 MgO:1.68 CaO:7.82 |
| Example 15 | Full fine powder | CA6:67.4 C2M2A14:30 | Al₂O₃:89.32 MgO:1.38 CaO:7.81 | 2.48 | CA6:67.4 C2M2A14:30 | Al₂O₃:89.32 MgO:1.38 CaO:7.81 |
| Example 16 | 60:40 | CA6:26.7 CM2A8:72 | A1₂O₃:86.65 MgO:6.05 CaO:6.22 | 2.90 | CA6:68 Corundum:30 | Al₂O₃:89.03 MgO:2.52 CaO:7.6 |
| Example 17 | 10:90 | CA6:84.2 C2M2A14:9.28 MgO·Al₂O₃4.60 | Al₂O₃:89.14 MgO:1.71 CaO:7.65 | 2.57 | CA6:93.5 MgO·Al₂O₃:5.22 | Al₂O₃:97.07 MgO:1.32 CaO:7.67 |
| Example 18 | Full fine powder | CA6:66.4 Corundum:30 | Al₂O₃:94.10 CaO:5.80 | 2.52 | CA6:66.4 Corundum:30 | Al₂O₃:94.10 CaO:5.80 |
| Example 19 | 60:40 | CA6:26.7 C2M2A14:72 | Al₂O₃:88.87 MgO:3.36 CaO:7.16 | 2.60 | CA6:68.1 Corundum:30 | Al₂O₃:90.46 MgO:1.31 CaO:7.82 |
| Example 20 | 40:60 | CA6:85.5 Corundum:11.8 | Al₂O₃:92.03 CaO:7.18 | 2.90 | CA6:77.2 Corundum:20 | Al₂O₃:93.2 CaO:6.61 |
| Example 21 | 10:90 | CA6:70.7 C2M2A14:9.28 MgO·Al₂O₃:10.0 | Al₂O₃:88.5 MgO:3.02 CaO:7.21 | 2.85 | CA6:78.6 MgO·Al₂O₃:11.2 | Al₂O₃:89.3 MgO:2.95 CaO:7.20 |
| Example 22 | 60:40 | CA6:31.5 C2M2A14:60 CM2A8:7.48 | Al₂O₃:88.08 MgO:3.41 CaO:7.15 | 2.55 | CA6:78.8 CM2A8:20 | Al₂O₃:89.03 MgO:1.68 CaO:7.74 |
| Example 23 | 60:40 | CA6:31.5 C2M2A14:8 CM2A8:60 | Al₂O₃:87.50 MgO:5.43 CaO:6.08 | 2.55 | CA6:78.8 C2M2A14:20 | Al₂O₃:90.60 MgO:0.98 CaO:7.76 |
| Example 24 | 40:60 | CA6:82.8 Corundum:9.72 MgO·Al₂O₃:4.0 | Al₂O₃:89.31 MgO:1.14 CaO:6.92 | 2.55 | CA6:73.8 Corundum:16.3 MgO·Al₂O₃:6.7 | Al₂O₃:90.28 MgO:1.91 CaO:6.25 |
| Example 25 | 40:60 | CA6:82.7 Corumdum:15 | Al₂O₃:92.80 CaO:6.52 | 2.55 | CA6:72.5 Corumdum:25 | Al₂O₃:93.65 CaO:6.25 |
| Example 26 | 60:40 | CA6:29 CM2A8:57.5 Corundum:9.15 | Al₂O₃:88.91 MgO:4.92 CaO:5.80 | 2.55 | CA6:73.1 Corumdum:25.0 | Al₂O₃:93.65 CaO:6.25 |
| Example 27 | 10:90 | CA6:100 | Al₂O₃:91.2 CaO:8.40 | 2.55 | CA6:100 | Al₂O₃:91.1 CaO:8.40 |
| Example 28 | Full fine powder | CA6:61.7 Corundum:20.3 MgO·Al₂O₃:8 | Al₂O₃:90.04 MgO:2.2 5 CaO:5.80 | 2.55 | CA6:61.7 Corundum:20.3 MgAl₂O₄:8 | Al₂O₃:90.04 MgO:2.25 CaO:5.80 |
| Example 29 | 50:50 | CA6:99.5 | Al₂O₃:91.51 CaO:8.40 | 2.40 | CA6:100 | Al₂O₃:91.52 CaO:8.40 |
| Example 30 | 50:50 | CA6:100 | Al₂O₃:91.51 CaO:8.39 | 2.82 | CA6:100 | Al₂O₃:91.54 CaO:8.39 |
| Example 31 | 50:50 | CA6:99.5 | Al₂O₃:91.51 CaO:8.39 | 2.90 | CA6:99.5 | Al₂O₃:91.51 CaO:8.40 |
| Example 32 | 0:100 | CA6:86.7 MgO·Al₂O₃:10.0 | Al₂O₃:95.72 MgO:2.81 CaO:7.36 | 2.85 | CA6:86.7 MgO·Al₂O₃:10.0 | Al₂O₃:95.72 MgO:2.81 CaO:7.36 |
| Comparative Example 1 | 65:35 | CA6:68.75 Corundum:24.16 CA2:2.32 CA:2.51 | Al₂O₃:92.03 CaO:7.12 | 3.02 | CA6:42.35 Corundum:42.47 CA2:6.45 CA:7.02 | Al₂O₃:91.65 CaO:7.48 |

**Table 3 the thermal conductivity at 350 °C and erosion thickness of the refractory material obtained by Examples and Comparative Examples**

| | Thermal conductivity at 350 °C | Erosion thickness |
|---|---|---|
| | (w/m·K) | (mm) |
| Example 1 | 0.61 | 3.12 |
| Example 2 | 1.02 | 2.87 |
| Example 3 | 0.95 | 3.66 |
| Example 4 | 0.96 | 3.70 |
| Example 5 | 0.84 | 3.46 |
| Example 6 | 1.32 | 3.72 |
| Example 7 | 0.9 | 4.48 |
| Example 8 | 0.92 | 4.34 |
| Example 9 | 1.42 | 4.21 |
| Example 10 | 1.48 | 4.28 |
| Example 11 | 1.12 | 3.67 |
| Example 12 | 1.55 | 3.08 |
| Example 13 | 1.02 | 4.55 |
| Example 14 | 1.29 | 4.06 |
| Example 15 | 1.00 | 5.60 |
| Example 16 | 1.71 | 2.94 |
| Example 17 | 1.15 | 5.04 |
| Example 18 | 1.02 | 4.55 |
| Example 19 | 1.21 | 4.90 |
| Example 20 | 1.67 | 2.73 |
| Example 21 | 1.96 | 4.83 |
| Example 22 | 1.23 | 3.82 |
| Example 23 | 1.30 | 3.84 |
| Example 24 | 1.34 | 3.86 |
| Example 25 | 1.37 | 3.74 |
| Example 26 | 1.53 | 3.98 |
| Example 27 | 0.56 | 4.66 |
| Example 28 | 0.95 | 4.72 |
| Example 29 | 0.46 | 3.95 |
| Example 30 | 1.75 | 2.41 |
| Example 31 | 1.87 | 1.85 |
| Example 32 | 1.57 | 4.78 |
| Comparative Example 1 | 2.27 | 11 |

### Experimental Example 1

The refractory matrial obtained in Example 1 was compared with the CA6 castable prepared in Comparative Example 1.

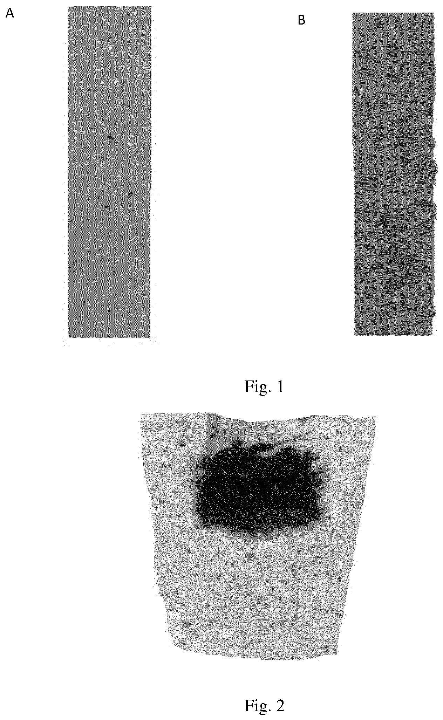

Wherein the treatment method was as follows: the CA6 refractory material obtained in Example 1 and the CA6 castable obtained in Comparative Example 1 were put into a high temperature furnace, heated to 1550 °C and treated for 3 h. The morphology after treatment is shown in Fig. 1.

As can be seen from Fig. 1, the sintering shrinkage of the two samples is very small and the surface is very clean.

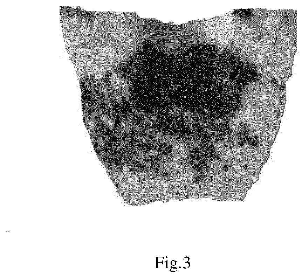

Fig. 2 and Fig. 3 are schematic diagrams of the resistance to steel slag erosion of the samples obtained in Example 1 and Comparative Example 1 after 1550 °C for 3 h, respectively. Wherein the steps of the resistance to steel slag erosion after 1550 °C for 3 h are shown as follows: making a crucible with refractory material, putting steel slag into it, heating to 1550 °C, keeping it for 3 h and cooling. The cooled sample is cut along the middle to measure the erosion thickness and corrosion of the slag.

As can be seen from Fig. 2 and Fig. 3, the steel slag in the CA6 castable sample of Comparative Example 1 has penetrated deeply, and the steel slag has penetrated through the crucible of the sample to the outside of the crucible, indicating that the castable has poor resistance and permeability to the erosion of slag. If the sample is used for permanent lining of ladle, steel leakage or red envelope of ladle will be caused if the working lining disappears. However, in Example 1, the permeability and erosion resistance to slag is very good, although its bulk density is only 2.55 g/cm³, indicating that Example 1 has good permeability resistance to slag.

The above is only a preferred embodiment of the present application and is not intended to limit the present application in other forms. Any person familiar with this field may make use of the disclosed technical content to change or adapt it to embodiments with equivalent variations. However, any simple modifications, equivalent variations, or adaptations of the above embodiments based on the technical essence of the present application, without departing from the content of the technical solution of the present application, still fall within the scope of protection of the technical solution of the present application.

## Claims

1. An CA6-based thermal-insulating refractory material with medium bulk density, the phase of the thermal-insulating refractory material comprises CA6 and one or two or more selected from C2M2A14, CM2A8, magnesium aluminate spinel and corundum.

2. The thermal-insulating refractory material according to claim 1, wherein based on the mass percentage in the thermal-insulating refractory material, the total content of CA6, C2M2A14, CM2A8, magnesium aluminate spinel and corundum is ≥90%, preferably 94.8-100%.

3. The thermal-insulating refractory material according to claim 1 or 2, wherein based on the mass percentage of the phase of the thermal-insulating refractory material, the phase content of CA6 is 26.7-100%, preferably 29.0-100%, more preferably 31.5-100%, still more preferably 31.5-99.5%, further preferably 38.7-99.5%;
the phase content of C2M2A14 is 0-72%, preferably 0-60%;
the phase content of CM2A8 is 0-72%, preferably 0-60%, further preferably 0-59.5%;
the phase content of magnesium aluminate spinel is 0-10%, 0-8.0%, 0-4.60%, 0-4.0%, preferably 0; and
the phase content of corundum is 0-30%, preferably 0-18%, more preferably 0-16.5%, further preferably 0-15%, most preferably 0-12%.

4. The thermal-insulating refractory material according to any one of claims 1-3, wherein the chemical composition of the thermal-insulating refractory material comprises Al₂O₃, CaO and MgO, based on the mass percentage in the thermal-insulating refractory material, the Al₂O₃ is 86.65-94.10%, preferably 87.60-94.10%, 86.65-92.80%, more preferably 88.07-94.10%, 87.50-92.60%;
the CaO is 5.80-8.40%, preferably 6.10-8.40%, 6.89-8.40%; and
the MgO is 0-6.05%, preferably 0-5.53%, 0-5.43%, 0-5.04%.

5. The thermal-insulating refractory material according to any one of claims 1-4, wherein the bulk density of the thermal-insulating refractory material is 2.40-2.90 g/cm³, preferably 2.40-2.82 g/cm³.

6. The thermal-insulating refractory material according to any one of claims 1-5, wherein the phase of the matrix part of the thermal-insulating refractory material comprises CA6 and one or two or more selected from corundum, magnesium aluminate spinel, C2M2A14 and CM2A8.

7. The thermal-insulating refractory material according to claim 6, wherein based on the mass percentage of the phase of the matrix part in the thermal-insulating refractory material, the phase content of CA6 is 67.4-100%, preferably 72.5-100%, 78.2-100%, 78.8-100%;
the phase content of corundum is 0-30%, preferably 0-20%, 0-25%;
the phase content of magnesium aluminate spinel is 0-10%, 0-8.0%, 0-6.7%, 0-5.22%, preferably 0;
the phase content of C2M2A14 is 0-30%, preferably 0-25%, 0-20%, 0-18.8%; and
the phase content of CM2A8 is 0-30%, preferably 0-25%, 0-20%, 0-18.8%.

8. The thermal-insulating refractory material according to claim 6 or 7, wherein the chemical composition of the matrix part of the thermal-insulating refractory material comprises Al₂O₃, CaO and MgO, based on the mass percentage of the matrix part in the thermal-insulating refractory material, the Al₂O₃ is 89.03-94.10%, preferably 89.03-93.65%, 90.30-93.20%, 89.03-93.28%;
the CaO is 5.80-8.40%, preferably 6.25-8.40%, 6.60-8.40%; and
the MgO is 0-2.52%, preferably 0-2.10%, 0-1.68%.

9. The thermal-insulating refractory material according to any one of claims 1-8, wherein the thermal-insulating refractory material is prepared by a method comprising the following steps:
mixing a granular material and a fine powder to obtain a mixed material, then subjecting the mixed material to hot-pressed sintering to obtain the thermal-insulating refractory material.

10. The thermal-insulating refractory material according to claim 9, wherein the fine powder is one or two or more selected from the group consisting of: CaO-containing fine powder, Al₂O₃-containing fine powder, and MgO-containing fine powder;
preferably the CaO-containing fine powder is one or two or more selected from the group consisting of: quicklime fine powder, limestone fine powder, calcium hydroxide fine powder, CaO·Al₂O₃ fine powder, CaO·2Al₂O₃ fine powder, 12CaO·7Al₂O₃ fine powder, CA6 fine powder, C2M2A14 fine powder and CM2A8 fine powder;
preferably the Al₂O₃-containing fine powder is one or two or more selected from the group consisting of: active α-Al₂O₃ fine powder, γ-Al₂O₃ fine powder, ρ-Al₂O₃ fine powder, aluminum hydroxide fine powder, industrial alumina fine powder, white corundum fine powder, sub-white corundum fine powder, dense corundum fine powder, sintered corundum fine powder, and tabular corundum fine powder;
preferably the MgO-containing fine powder is one or two or more selected from the group consisting of: magnesite fine powder, light-calcined magnesia fine powder, brucite fine powder, magnesium hydroxide fine powder, magnesium chloride fine powder, high purity magnesia fine powder, and fused magnesia fine powder.

11. The thermal-insulating refractory material according to claim 9 or 10, wherein the granular material is one or two or more selected from the group consisting of: CA6, C2M2A14 and CM2A8, preferably CA6.

12. The thermal-insulating refractory material according to any one of claims 9-11, wherein the mass ratio of the granular material to the fine powder is 0-60:40-100.

13. The thermal-insulating refractory material according to any one of claims 9-12, wherein the hot-pressed sintering is performed by
putting the mixed material into a mold of a high temperature device for hot-pressed sintering; or
molding the mixed material at normal temperature, and then putting it into a mold of a high temperature device for hot-pressed sintering; or
molding the mixed material at normal temperature, and presintering it at low temperature, and then putting it into a mold of a high temperature device for hot-pressed sintering.

14. The thermal-insulating refractory material according to any one of claims 9-13, wherein the temperature of the hot-pressed sintering is 1550-1750°C; preferably the strength of the hot-pressed sintering is 0.5-10 MPa.

15. A preparation method for thermal-insulating refractory material, comprising the following steps:
mixing a granular material and a fine powder to obtain a mixed material, then subjecting the mixed material to hot-pressed sintering to obtain the thermal-insulating refractory material.

16. The preparation method according to claim 15, wherein the fine powder is one or two or more selected from the group consisting of: CaO-containing fine powder, Al₂O₃-containing fine powder, and MgO-containing fine powder;
preferably the CaO-containing fine powder is one or two or more selected from the group consisting of: quicklime fine powder, limestone fine powder, calcium hydroxide fine powder, CaO·Al₂O₃ fine powder, CaO·2Al₂O₃ fine powder, 12CaO·7Al₂O₃ fine powder, CA6 fine powder, C2M2A14 fine powder and CM2A8 fine powder;
preferably the Al₂O₃-containing fine powder is one or two or more selected from the group consisting of: active α-Al₂O₃ fine powder, γ-Al₂O₃ fine powder, p-Al₂O₃ fine powder, aluminum hydroxide fine powder, industrial alumina fine powder, white corundum fine powder, sub-white corundum fine powder, dense corundum fine powder, sintered corundum fine powder, and tabular corundum fine powder;
preferably the MgO-containing fine powder is one or two or more selected from the group consisting of: magnesite fine powder, light-calcined magnesia fine powder, brucite fine powder, magnesium hydroxide fine powder, magnesium chloride fine powder, high purity magnesia fine powder, and fused magnesia fine powder.

17. The preparation method according to claim 15 or 16, wherein the granular material is one or two or more selected from the group consisting of: CA6, C2M2A14 and CM2A8, preferably CA6.

18. The preparation method according to any one of claims 15-17, wherein the mass ratio of the granular material to the fine powder is 0-60:40-100.

19. The preparation method according to any one of claims 15-18, wherein the hot-pressed sintering is performed by
putting the mixed material into a mold of a high temperature device for hot-pressed sintering; or
molding the mixed material at normal temperature, and then putting it into a mold of a high temperature device for hot-pressed sintering; or
molding the mixed material at normal temperature, and presintering it at low temperature, and then putting it into a mold of a high temperature device for hot-pressed sintering.

20. The preparation method according to any one of claims 15-19, wherein the temperature of the hot-pressed sintering is 1550-1750°C; preferably the strength of the hot-pressed sintering is 0.5-10 MPa.

21. A permanent lining for iron and steel smelting ladles, wherein it comprises the thermal-insulating refractory material according to any one of claims 1-14 or the thermal-insulating refractory material prepared by the preparation method according to any one of claims 15-20.

22. A thermal-insulating lining or working lining for an aluminum liquid ladle, wherein it comprises the thermal-insulating refractory material according to any one of claims 1-14 or the thermal-insulating refractory material prepared by the preparation method according to any one of claims 15-20.
